# FASCICULE DE BREVET EUROPEEN

(11) **EP 1 940 118 B1**
(45) Date de publication et mention de la délivrance du brevet: **29.09.2010**
(21) Numéro de dépôt: 07291643.0
(22) Date de dépôt: 28.12.2007
(51) Int. Cl.: H04L 29/06

(54) **Procédé et système de routage de flux multimédias, station mobile de radiocommunication pour réaliser ce routage**
Verfahren und System für das Routing von Multimediaflüssen und mobile Station für Funkkommunikations zur Durchführung dieses Routings
Method and system for routing multimedia flows, mobile radio communication station for performing this routing

(30) Priorité: 29.12.2006 FR 0611541
(43) Date de publication de la demande: 02.07.2008
(73) Titulaire: Societé Française du Radiotéléphone, 75008 Paris (FR)
(72) Inventeur: Gaucherand, Xavier, 75016 Paris (FR)
(74) Mandataire: Debay, Yves

(56) Documents cités:
- WO-A-2006/043977
- US-A1- 2004 017 788

## Description

### DOMAINE TECHNIQUE DE L'INVENTION

La présente invention concerne les télécommunications, et plus particulièrement, dans le but d'utiliser des fonctionnalités d'un téléphone mobile de radiocommunication au service d'autres appareils, un procédé et un système de routage de flux multimédias. L'invention concerne également une station mobile de radiocommunication pour la mise en oeuvre d'un tel procédé.

### ARRIERE-PLAN TECHNOLOGIQUE DE L'INVENTION

Il est connu dans l'art antérieur de nombreux systèmes de communication permettant de transmettre entre différents appareils des informations audio et vidéo. Un inconvénient des solutions actuelles est la multiplicité des appareils, ce qui représente un coût élevé pour le consommateur. En outre, il devient de plus en plus difficile pour l'utilisateur de faire face à la complexité d'interconnexion entre les différents appareils, avec la nécessité d'installer des logiciels spécifiques d'adaptation à chacun des appareils. Il existe donc un besoin pour des méthodes de communication permettant de contrôler de façon simple les flux audio et vidéo à l'aide d'un unique appareil, en transmettant des flux audio et vidéo en temps réel.

Le document US 2006/0158439 prévoit un terminal mobile doté d'un système de communication audio et vidéo avec un PC hôte. Le terminal mobile fonctionne comme une caméra web grâce au PC hôte qui transfère les informations audio et vidéo issues du terminal avec un terminal de communication distant via un réseau IP (Internet Protocol). L'intérêt de ce type de système est la possibilité de transférer sur Internet en temps réel des informations audio et vidéo générées par un téléphone mobile, en évitant l'achat et la connexion spécifique d'une part d'un dispositif de capture vidéo et d'autre part d'un microphone.

Les réseaux de radiotéléphonie, en particulier de troisième génération (3G), permettent à l'utilisateur d'un terminal mobile de bénéficier d'un nombre croissant de services de visiophonie, de téléchargement avec délivrance d'informations audio et vidéo. Or il n'existe pas actuellement de méthodes de communication simples permettant de délivrer ces services, fournis à travers le réseau, sur d'autres appareils en temps réel. Le type d'application décrit dans le document US 2006/0158439 reste en effet limité à une utilisation à domicile d'un terminal mobile, avec une liaison à courte distance (Bluetooth®, infra-rouge ou similaire) vers une interface de communication branchée au PC. Autrement dit, le terminal mobile n'est qu'un accessoire par rapport au PC.

Il est également connu, par le document US 2006/0103721, un système de vidéoconférence utilisant un téléphone mobile pour capter les signaux audio et vidéo et un ordinateur en liaison avec le téléphone par une interface de type USB, 1394 ou radio (IR, Bluetooth®). Cet ordinateur peut ainsi réceptionner un signal contenant les informations audio et vidéo codées sous la forme de paquets par un convertisseur du téléphone. L'ordinateur diffuse ces informations et génère parallèlement des paquets IP encapsulant ces mêmes informations audio et vidéo. Le téléphone mobile reçoit aussi des signaux retour transmis par l'ordinateur, de sorte que le téléphone peut restituer les images et les sons correspondant à une réponse du réseau IP. Là encore, le téléphone mobile ne constitue qu'un accessoire par rapport au PC, afin d'apporter ses fonctions de conversion audio/vidéo.

Du point de vue de l'opérateur qui gère le réseau de téléphonie comme du point de vue des utilisateurs, il existe donc un besoin de faire jouer à un terminal mobile de communication un rôle plus important et plus central dans les méthodes de transmission en temps réel de flux audio et vidéo.

### DESCRIPTION GENERALE DE L'INVENTION

La présente invention a donc pour objet de supprimer un ou plusieurs des inconvénients de l'art antérieur en définissant un procédé facilitant l'exportation de fonctions et services multimédias délivrés au niveau d'une station mobile de radiocommunication vers d'autres appareils.

A cet effet, l'invention concerne un procédé de routage de flux multimédias à l'aide d'une station mobile de radiocommunication dotée d'une première interface de communication avec un réseau de radiotéléphonie, comprenant une étape de transfert de flux audio et/ou vidéo entre la station mobile et un terminal local de communication par utilisation d'une seconde interface de communication de la station mobile, une étape de réception de flux audio et/ou vidéo étant réalisée dans une unité de traitement de la station mobile pendant ladite étape de transfert, le procédé comprenant en outre une étape de gestion par un module gestionnaire de l'unité de traitement de chaque flux audio et/ou vidéo reçu,
caractérisé en ce qu'il comporte :
une réception simultanée, lors de l'étape de réception, par des moyens de réception du module gestionnaire, de deux flux essentiellement vidéo ou associés à un flux audio, un seul desdits flux vidéo étant reçu via la première interface de communication,
   - une étape d'identification d'une provenance de chaque flux,
   - une étape de vérification par une lecture, réalisée par des moyens de contrôle du module gestionnaire, dans une base de données d'un module d'identité amovible logé dans la station, de données d'autorisation de routage associées à ladite provenance,
   - une étape d'autorisation de routage,
   - une étape de routage, en cas d'autorisation, incluant un aiguillage par des moyens de routage desdits deux flux vidéo vers au moins un port de sortie dont l'un appartient à la seconde interface de communication pour permettre ladite étape de transfert.

Grâce au procédé selon l'invention, l'utilisateur dispose de nouvelles options d'utilisation de flux audio et vidéo. Il est ainsi permis de router des flux multimédias transmis à son téléphone portable à travers le réseau (flux « On Net ») ou générées par ce dernier (flux « Off Net »). Le téléphone portable peut donc étendre plusieurs de ses propres fonctions sur les dispositifs externes et/ou servir de relais pour les flux de communication, les deux usages ON Net et OFF Net étant possibles.

Selon une autre particularité, l'aiguillage est effectué vers un unique port de sortie de la seconde interface de communication, l'étape de routage comprenant une étape de combinaison desdits deux flux vidéo au niveau de la seconde interface de communication.

Selon une autre particularité, l'étape de réception simultanée est réalisée dans le module gestionnaire par deux ensembles distincts de réception de paquets de données dont l'un est associé à une réception de flux vidéo et éventuellement audio via la première interface de communication et l'autre est associé à une réception de flux vidéo et éventuellement audio via la seconde interface de communication.

Selon une autre particularité, l'étape de réception simultanée est réalisée dans le module gestionnaire par deux ensembles distincts de réception de paquets de données dont l'un est associé à une réception de flux vidéo et éventuellement audio via la première interface de communication et l'autre est associé à une réception de flux vidéo et éventuellement audio générés par des dispositifs de la station mobile.

Selon une autre particularité, l'aiguillage est effectué vers un unique port de type USB de la seconde interface de communication.

Selon une autre particularité, l'étape de routage est précédée d'une étape de fusion des deux flux vidéo, par des moyens de fusion du module gestionnaire, pour obtenir des images composées avec des sous-images séparées correspondant aux flux vidéo respectifs.

Selon une autre particularité, le procédé comprend une étape d'extraction par une application gestionnaire du terminal local pour extraire et acquérir de façon séparée des trames associées à chacun desdits flux vidéo lors d'une récupération d'informations audiovisuelles transmises par la station mobile via la seconde interface de communication.

Selon une autre particularité, le procédé comprend :
- une étape de paramétrage du module gestionnaire à l'aide d'une interface d'utilisateur de la station mobile pour sélectionner au moins une interface de sortie d'une des interfaces de communication de la station mobile ;
- une étape d'autorisation de routage du ou des flux à travers ladite interface de sortie sélectionnée, comprenant une étape d'identification par le module gestionnaire de chaque flux audio et/ou vidéo reçu pour permettre de déterminer une provenance du flux et une étape de vérification dans une base de données locale que la station mobile dispose de données d'autorisation associées aux flux de ladite provenance déterminée ; et
- en fonction de l'étape de paramétrage et après récupération de données d'autorisation lors de ladite étape de vérification, une étape de routage par des moyens de routage du module gestionnaire, de chaque flux audio et/ou vidéo reçu, permettant une transmission en temps réel du flux audio et/ou vidéo reçu vers un appareil extérieur à la station mobile pendant ladite étape de transfert.

Selon une autre particularité, l'interface de sortie sélectionnée lors de l'étape de paramétrage est choisie parmi plusieurs interfaces de sortie dont l'une correspond à l'interface de sortie de la première interface de communication.

Selon une autre particularité, le procédé comprend lors de l'étape de transfert :
- une étape de réception par le terminal d'un signal transportant des paquets de données correspondant au(x) flux transféré(s) par la station mobile ;
- une étape de conversion du signal reçu, par des moyens de conversion du terminal ; et
- une étape de traitement des flux par une application gestionnaire du terminal pour restituer et diffuser localement des signaux audio et/ou vidéo via un dispositif de diffusion audio et/ou vidéo connecté localement au terminal.

Selon une autre particularité, le procédé comprend lors de l'étape de transfert :
- une étape de réception par le terminal d'un signal transportant des paquets de données correspondant au(x) flux transféré(s) par la station mobile ;
- une étape de conversion du signal reçu, par des moyens de conversion du terminal ; et
- une étape d'enregistrement de paquets de données correspondant au(x) flux transféré(s), obtenus lors de l'étape de conversion.

Selon une autre particularité, le procédé comprend lors de l'étape de transfert :
- une étape de réception par une première interface du terminal d'un signal transportant des paquets de données correspondant au(x) flux transféré(s) par la station mobile ;
- une étape de conversion du signal envoyé par la station mobile, par des moyens de conversion du terminal, pour récupérer les paquets de données transportés dans ce signal ;
- une étape de routage, par une application gestionnaire du terminal, des paquets récupérés vers une adresse IP déterminée pour transmettre ces paquets à un appareil distant connecté au réseau Internet ; et
- une étape d'envoi vers l'appareil distant, via une seconde interface du terminal, de paquets transportant le(s) flux transféré(s) par la station mobile.

Selon une autre particularité, l'étape de transfert utilise, dans un mode choisi lors de l'étape de paramétrage, la station mobile comme un pont d'une infrastructure de réseaux entre le réseau de radiotéléphonie et ledit appareil distant, les flux audio et/ou vidéo reçus lors de l'étape de réception dans l'unité de traitement de la station mobile étant issus d'un appareil connecté à la station mobile via le réseau de radiotéléphonie.

Selon une autre particularité, l'étape de transfert comprend :
- une étape de réception par la seconde interface du terminal de paquets de données dites données de retour générés par l'appareil distant connecté au réseau Internet ;
- après un traitement des paquets issus de l'appareil distant, une étape de conversion des paquets, par des moyens de conversion du terminal, en un signal dit signal de retour envoyé vers la station mobile ;
- une étape de réception par la seconde interface de communication de la station mobile du signal de retour ;
- une étape de conversion du signal de retour, par des moyens de conversion associés à la seconde interface de communication de la station mobile, pour récupérer les paquets de données de retour transportés dans ce signal de retour ;
- une étape de routage vers le réseau de radiotéléphonie, par le module gestionnaire du terminal après récupération de données d'autorisation, des paquets de données de retour récupérés vers la première interface de communication ; et
- une étape d'envoi, via la première interface de communication, d'un signal transportant lesdites données de retour vers un appareil connecté à la station mobile via le réseau de radiotéléphonie.

Selon une autre particularité, ladite étape de réception comprend une réception par l'unité de traitement de flux audio et/ou vidéo générés au niveau de la station mobile.

Selon une autre particularité, l'étape de routage vers l'appareil extérieur est précédée d'une étape de cryptage des flux à router par utilisation de moyens de cryptage stockés dans un module d'identité amovible logé dans la station mobile lorsque ces flux ont été identifiés comme non générés sur la station mobile elle-même.

Cette étape de cryptage peut être à l'initiative de l'opérateur des flux ou de l'utilisateur.

Selon une autre particularité, l'étape de routage vers l'appareil extérieur est précédée d'une étape de signature des flux à router, par utilisation de moyens de signature stockés dans un module d'identité amovible logé dans la station mobile lorsque ces flux ont été identifiés comme générés sur la station mobile elle-même.

Cette étape peut également être à l'initiative de l'opérateur des flux ou de l'utilisateur. En effet seuls les données et/ou les flux générés sur la station mobile elle-même sont propriété de l'utilisateur du mobile et par conséquent « signables » même si cette fonction peut être appliquée à d'autres flux, ne serait-ce que pour identifier le passage via la station d'un utilisateur.

Les passages de flux non générés sur le mobile lui-même amènent à proposer des dispositifs complémentaires de routage (cryptage, signature, droits de passage). Ces mécanismes et les dispositifs associés sont tous réalisés sur le mobile avec, là où cela fait sens le contrôle via la carte SIM.

Selon une autre particularité, l'étape de routage vers l'appareil extérieur comprend une étape de facturation de droits de passage en fonction des données d'autorisation récupérées lors de l'étape de vérification.

Selon une autre particularité, l'étape de vérification comprend une lecture, par des moyens de contrôle du module gestionnaire, desdites données d'autorisation dans une base de données d'un module d'identité amovible logé dans la station mobile. Les données stockées peuvent être notamment des données de gestion et/ou commerciales complémentaires sur le client qui peuvent être vérifiées dans des bases de données externes.

Selon une autre particularité, l'étape d'autorisation de routage comprend une étape de contrôle de localisation de la station mobile, incluant une réception par la station mobile de données de localisation (données techniques de localisation), l'étape de routage n'étant déclenchée que si les données de localisation de la station mobile coïncident avec une zone de localisation autorisée définie par les données d'autorisation.

Selon une autre particularité, l'étape d'autorisation comprend une étape de contrôle de l'appartenance de l'utilisateur à une communauté (commerciale ou non) du réseau destinataire des flux, et ce au moyen des données de gestion et/ou commerciales fournies par l'opérateur. Par exemple, autorisation à des conditions préférentielles accordées pour effectuer le routage de flux entre le réseau d'un opérateur mobile et un réseau « fixe » (exemple : accès xDSL) pour un utilisateur client du réseau de l'opérateur Mobile mais AUSSI client du réseau fixe (exemple : accès xDSL), sachant que les conditions préférentielles peuvent être associées à des accords entre opérateurs.

Selon une autre particularité, des données d'autorisation recherchées lors de l'étape de vérification sont des moyens de décryptage et/ou des moyens de signature stockés dans un module d'identité amovible logé dans la station mobile.

Selon une autre particularité, les données d'autorisation peuvent être des données techniques et/ou de gestion et/ou commerciales présentes sur un serveur du réseau de l'opérateur Mobile (ex : HLR).

Selon une autre particularité, la séquence de récupération des données d'autorisation (techniques et/ou gestion et/ou commerciales) et des données opérateurs (techniques) peut être réalisée de façon « transparente pour l'utilisateur » lors d'une phase d'identification/authentification sur le réseau.

Selon une autre particularité, une requête d'appel via le réseau de radiotéléphonie peut être reçue ou émise par la station mobile pendant le transfert du flux audio et/ou vidéo, le procédé comprenant une étape de suspension, réalisée par des moyens de gestion de priorité entre plusieurs tâches, de l'étape de routage et du transfert du flux audio et/ou vidéo reçu lorsque la station mobile entre dans un mode de communication de type voix par utilisation de la première interface de communication.

Selon une autre particularité, l'étape de routage comprend un routage du flux audio et/ou vidéo reçu vers au moins un terminal local situé à proximité de la station mobile, dans une même zone dite domestique, et est suivie dans ce cas d'une étape d'envoi vers un serveur du réseau d'une information relative audit terminal local lorsque le flux audio et/ou vidéo transféré est issu du réseau de radiotéléphonie.

Selon une autre particularité, l'information relative au terminal local est stockée dans une mémoire de la station mobile, lors d'une étape de renseignement permettant d'associer au moins une interface de sortie à un terminal local (au sein d'un groupe de terminaux éligibles) déterminé.

Dans ce cadre, l'étape d'autorisation peut être conditionnée (accord ou non avec droits de facturation calculés spécifiquement) par la liaison à un terminal précis de ce groupe.

Un autre but de l'invention est d'apporter une solution à un ou plusieurs des problèmes rencontrés dans l'art antérieur en définissant une station mobile de radiocommunication capable de traiter plusieurs flux audio/vidéo et permettant d'étendre les applications mobiles multimédias à d'autres appareils.

Ce but est atteint par une station mobile de radiocommunication pour piloter un routage de flux multimédias, comprenant une première interface de communication avec un réseau de radiotéléphonie, une seconde interface de communication permettant un transfert de flux audio et/ou vidéo entre la station mobile et un terminal local de communication, une unité de traitement permettant de réceptionner des flux audio et/ou vidéo pendant ledit transfert, et un module gestionnaire dans l'unité de traitement pour gérer chaque flux audio et/ou vidéo reçu, caractérisée en ce qu'elle comporte une interface d'utilisateur pour paramétrer le module gestionnaire par sélection d'une option de routage, le module gestionnaire comprenant :
- des moyens de réception pour réceptionner simultanément deux flux essentiellement vidéo ou associés à un flux audio, un seul desdits flux vidéo étant reçu via la première interface de communication ;
- une base de données d'un module d'identité amovible, consultée par le module gestionnaire, stockant des données d'autorisation de routage associées à une provenance des flux à router,
- des moyens de routage desdits deux flux vidéo permettant d'aiguiller en temps réel ces flux vers au moins un port de sortie dont l'un appartient à la seconde interface de communication pour permettre ledit transfert.

Selon une autre particularité, la station mobile comprend une option de routage convergeant vers le terminal local, proposée dans un menu affiché sur un écran de la station, et dans laquelle le module de gestion permet d'aiguiller les deux flux vidéo vers un unique port de sortie de la seconde interface de communication.

Selon une autre particularité, le module gestionnaire comprend des moyens de génération de trames, couplés aux moyens de réception, pour encapsuler lesdits flux vidéo dans une même série de paquets de données.

Selon une autre particularité, le module gestionnaire comprend des moyens de fusion pour obtenir des images composées avec des sous-images séparées correspondant aux flux vidéo respectifs réceptionnés par les moyens de réception, les moyens de routage acheminant des paquets de données représentatives desdites images composées vers le port de sortie de la seconde interface de communication.

Selon une autre particularité, la station mobile comprend une option de routage comme pont de routage entre un réseau Internet et le réseau de radiotéléphonie, proposée dans un menu affiché sur un écran de la station, le module gestionnaire permettant dans cette option de pont de routage d'aiguiller les deux flux vidéo respectivement vers un port de sortie de la première interface de communication et vers un port de sortie de la seconde interface de communication.

Selon une autre particularité, le module gestionnaire comprend des moyens de génération de trames, couplés aux moyens de réception, pour encapsuler chacun desdits flux vidéo dans une série de paquets de données, les moyens de routage étant agencés pour aiguiller chacune des séries vers un port de sortie déterminé selon l'option de routage.

Selon une autre particularité, l'interface d'utilisateur permettant de sélectionner au moins une interface de sortie d'une des interfaces de communication de la station mobile, le module gestionnaire comprenant :
- des moyens d'autorisation de routage du flux à travers l'interface de sortie sélectionnée, aptes à identifier chaque flux audio et/ou vidéo reçu pour permettre de déterminer une provenance du flux et à vérifier dans la base de données locale que la station mobile dispose de données d'autorisation associées aux flux de ladite provenance déterminée ; et
- des moyens de routage de chaque flux audio et/ou vidéo reçu, permettant une transmission en temps réel du flux audio et/ou vidéo reçu vers un appareil extérieur à la station mobile pendant ledit transfert, les moyens de routage étant activés en fonction de l'option de routage sélectionnée par les moyens d'autorisation après récupération desdites données d'autorisation.

Selon une autre particularité, l'interface d'utilisateur comprend un écran affichant dans au moins un menu plusieurs choix d'interfaces de sortie dont l'une correspond à l'interface de sortie de la première interface de communication.

Selon une autre particularité, la station mobile comprend un module d'identité amovible logé à l'intérieur d'un boîtier de la station amovible, le module d'identité incluant des moyens de cryptage utilisables par le module gestionnaire pour crypter des flux à router lorsque ces flux ont été identifiés comme non générés sur la station mobile elle-même.

Selon une autre particularité, la station mobile comprend un module d'identité amovible logé à l'intérieur d'un boîtier de la station amovible, le module d'identité incluant des moyens de signature utilisables par le module gestionnaire pour signer des flux à router lorsque ces flux ont été identifiés comme générés sur la station mobile elle-même.

Selon une autre particularité, l'interface d'utilisateur propose un paramétrage du module gestionnaire selon un mode de double gestion permettant à la fois, lors dudit transfert de router des premiers flux audio et/ou vidéo d'une interface d'entrée de la première interface de communication vers une interface de sortie de la seconde interface de communication et des seconds flux audio et/ou vidéo d'une interface d'entrée de la seconde interface de communication vers une interface de sortie de la première interface de communication.

Selon une autre particularité, l'unité de traitement comporte des moyens de réception de paquets de données de deux provenances agencés pour recevoir en alternance pendant ledit transfert des flux audio et/ou vidéo via la première interface de communication et des flux audio et/ou vidéo via la seconde interface de communication.

Selon une autre particularité, le module gestionnaire détecte une réception ou un envoi d'une requête d'appel via le réseau de radiotéléphonie pendant le transfert du flux audio et/ou vidéo, des moyens de gestion de priorité entre plusieurs tâches étant prévus dans le module gestionnaire pour réaliser une suspension, en cas de détection de la requête appel, du routage et du transfert de flux audio et/ou vidéo.

Selon une autre particularité, la station mobile comprend un module d'identité amovible doté d'une base de données stockant lesdites données d'autorisation.

Selon une autre particularité, une base de données des informations utiles au pilotage et à la gestion des flux est constituée dans un module d'identité de la station mobile et comprend, des données d'utilisateur (identifiant, nom, clefs de signature et de cryptage, etc.), des données techniques (version de produits logiciels, type de matériels, etc.), des données commerciales (options souscrites sur les réseaux mobile et autres réseaux, éléments de facturation associés, etc.) et des données de connectivité (identifiant des matériels connectables sous certaines conditions, etc.).

Selon une autre particularité, la station mobile comprend un mode de communication voix, un mode de capture et d'enregistrement de vidéo et un mode de vidéoconférence.

Un autre but de l'invention est d'apporter une solution à un ou plusieurs des problèmes rencontrés dans l'art antérieur en définissant un système de vidéo conférence utilisant au maximum des fonctionnalités d'une station mobile de radiocommunication.

Ce but est atteint par un système de vidéoconférence, comprenant dans une même zone domestique la station mobile selon l'invention et un terminal local connecté à la station mobile, ledit terminal disposant d'un dispositif de diffusion audio et/ou vidéo et d'une application gestionnaire permettant un transfert de flux audiovisuels via la connexion avec ladite station mobile.

L'invention, avec ses caractéristiques et avantages, ressortira plus clairement à la lecture de la description faite en référence aux dessins annexés donnés à titre d'exemples non limitatifs dans lesquels :
- la figure 1 montre un exemple de réalisation d'un système conforme à l'invention ;
- la figure 2 illustre diverses possibilités de communication permettant d'étendre des fonctions d'une station mobile de radiocommunication selon l'invention à d'autres appareils ;
- les figures 3A et 3B représentent des exemples respectifs de menus de fonctions réalisables par une station mobile selon l'invention ;
- la figure 4A montre un exemple de contrôle permettant un routage de flux audio et/ou vidéo capturés au niveau de la station mobile vers un ordinateur ;
- la figure 4B représente un logigramme d'étapes d'un pilotage du routage de flux multimédias, selon un procédé conforme à l'invention ;
- la figure 5 montre un exemple de contrôle permettant un routage de flux audio et/ou vidéo, transmis depuis un réseau de radiotéléphonie et réceptionnés par la station mobile, vers un ordinateur ;
- la figure 6 illustre les possibilités de gestion au sein de la station mobile du routage de flux audio et/ou vidéo ;
- la figure 7A représente un logigramme d'étapes réalisées par la station mobile pour établir une communication poste à poste avec un équipement connecté au réseau de radiotéléphonie et exporter des données de réseau (de type page webcam) ainsi que des flux hors réseau vers un appareil multimédia en liaison avec la station mobile ;
- la figure 7B montre un système de communication incluant la station mobile selon l'invention et le terminal local, la station mobile fonctionnant selon le mode de réalisation de la figure 7A comme un système (webcam) retransmetteur de flux audio/vidéo et échangeur de données ;
- la figure 8A représente un logigramme d'étapes réalisées par la station mobile pour réaliser un portage vers un appareil distant d'un flux audio et/ou vidéo émanant du réseau et d'un flux audio et/ou vidéo issu de la station ;
- la figure 8B montre un système de communication incluant la station mobile selon l'invention et le terminal local, la station mobile fonctionnant selon le mode de réalisation de la figure 8A ;
- la figure 9A représente un logigramme d'étapes réalisées par la station mobile pour réaliser un pont routeur entre le réseau de radiotéléphonie et un PC relié au réseau Internet ;
- la figure 9B montre un système de communication incluant la station mobile selon l'invention et le terminal local, la station mobile fonctionnant selon le mode de réalisation de la figure 9A ;
- la figure 9C illustre des étapes réalisées au niveau du terminal local en liaison à courte distance avec la station mobile, conformément aux modes de réalisation des figures 9A et 9B ;
- la figure 10 montre un premier exemple de scénario de contrôle de routage permis selon l'invention ;
- la figure 11 montre un deuxième exemple de scénario de contrôle de routage permis selon l'invention.

### DESCRIPTION DES MODES DE REALISATION PREFERES DE L'INVENTION

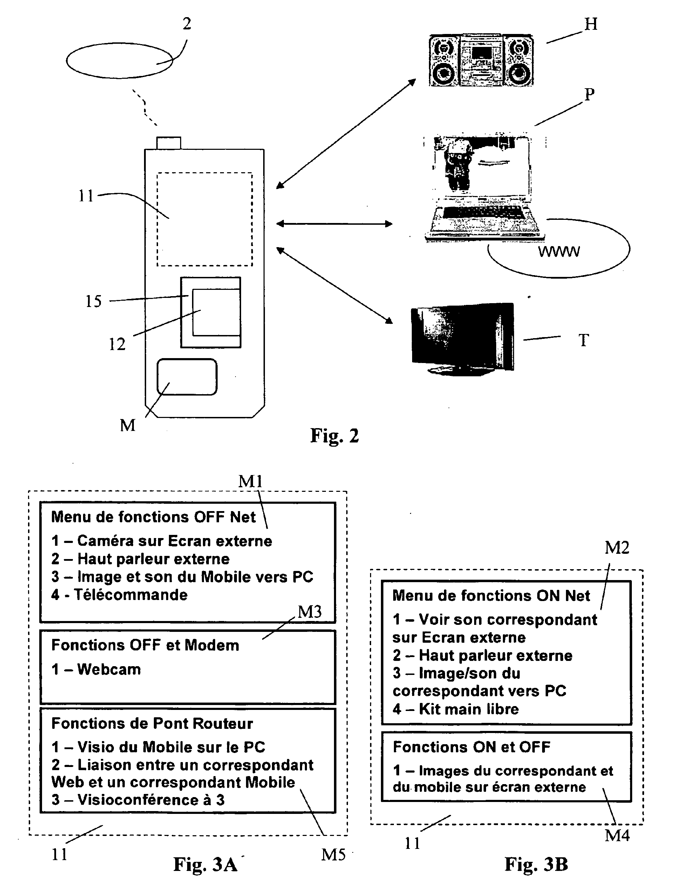

Le procédé vise à décliner de plusieurs façons des fonctions et services d'une station mobile (1) de radiocommunication, en permettant d'utiliser la station mobile (1) comme dispositif de communication en liaison avec d'autres appareils. En référence à la figure 2, la station mobile (1) peut fonctionner comme une caméra Web (webcam) en liaison avec un ordinateur (P) connecté à un réseau IP. La station mobile (1) peut également être utilisée comme microphone d'une régie ou d'une chaîne Hi-Fi (H) ou d'un Karaoké. La station mobile (1) peut également servir de caméra d'un écran d'ordinateur ou de Téléviseur (T), etc. Les flux 'captés' de façon autonome (en Off Net) sur des dispositifs de réception de la station mobile sont stockés et/ou envoyés en temps réel vers l'appareil connecté (PC, Chaîne ou Régie, Ecran TV, Ecran PC). L'appareil est doté d'un terminal de communication (3) avec la station mobile (1), une liaison à courte distance permettant la communication entre eux. L'appareil et la station mobile (1) se situent ainsi dans une même zone d'étendue restreinte dite "zone domestique".

Une reprise des flux multimédias en temps réel par la station mobile (1) peut être réalisée pour autoriser des connexions simples servant à diffuser un flux audio et/ou vidéo. Ces connexions simples peuvent consister en un raccordement à une chaîne Hi-Fi pour une fonction micro d'ambiance et Karaoké, un raccordement à un téléviseur (T) pour une visualisation directe des flux, par exemple par utilisation d'une prise de type S-Vidéo. Des connexions plus élaborées peuvent aussi être autorisées lorsqu'une application (30) gestionnaire de ces flux est spécifiquement prévue dans l'appareil à raccorder à la station mobile (1).

Comme illustré aux figures 3A et 3B, la station mobile (1) comprend une interface d'utilisateur (i1, M1, M2, M3, M4, M5) de la station mobile (1) pour sélectionner au moins une interface de sortie d'une des interfaces de communication (101, 102, 103, 104) de la station mobile (1). Cette sélection peut avantageusement être réalisée via une option disponible dans un menu (M1, M2, M3, M4, M5) affiché sur un écran (11) de visualisation de la station mobile (1). Les options ainsi accessibles peuvent faire intervenir une activation d'au moins un port de communication tel que IR (infra-rouge), Bluetooth®, USB, liaison filaire ou autre liaison à courte distance de façon à ce que des fonctions accessibles par la station mobile (1) soient exportées vers un terminal (3) disposant du port de communication compatible avec celui de la station mobile (1).

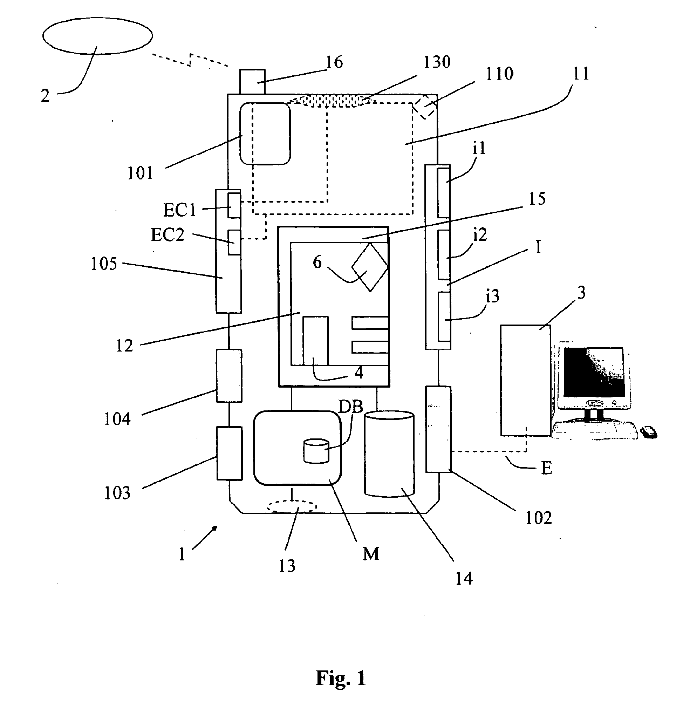

La station mobile (1) va à présent plus particulièrement être décrite en liaison avec la figure 1.

Dans la station mobile (1), l'unité centrale ou unité de traitement (15) commande et gère une interface (I) de traitement d'entrées comme par exemple une entrée (i1) pour un clavier, une entrée (i2) pour un capteur numérique de type caméra et/ou photo et une entrée (i3) pour un microphone, des sorties (105) incluant un circuit (EC1) contrôleur de son et un circuit (EC2) de commande des moyens de visualisation (11), une première interface (101) de communication avec un réseau de radiotéléphonie (2) et une seconde interface (102) de communication permettant de communiquer avec un terminal (3) local tel qu'un PC ou appareil de reproduction audiovisuel et/ou stockage d'informations audiovisuelles. La première interface (101) de communication comporte un circuit électronique de commande de télécommunications, apte à traiter des signaux radio. Une antenne radio (16) couplée à ce circuit permet l'émission et la réception de ces signaux radio. La seconde interface (102) de communication peut comporter au moins un port USB (Universal Serial Bus) ou un circuit d'entrée et de sortie pour des signaux Bluetooth®, Infra-rouges, RFID (Radio Frequency Identification) ou autres signaux de moyenne ou courte portée.

Pour la reproduction au niveau de la station mobile (1) des flux audio reçus, le système comporte un ou plusieurs haut-parleurs (130) recevant le signal d'un amplificateur (non représenté) relié à l'unité de traitement (15). Le microphone (13) de la station mobile (1) est relié au circuit (EC1) contrôleur de son. Les moyens de visualisation (11) comportent un écran plat qui peut servir à l'affichage des flux vidéo reçus. L'ensemble des composants électroniques de la station mobile (1) est intégré dans un boîtier en une ou plusieurs parties qui permet de loger en outre une ou plusieurs batteries ainsi qu'un module (M) d'identité amovible d'abonné tel qu'une carte U(SIM). Comme peut l'apprécier l'homme du métier, l'architecture matérielle (hardware) de la station mobile (1) peut être similaire à celle illustrée dans la figure 3 du document US 2006/0158439, de façon notamment à traiter des flux multimédias codés sous différents formats.

De manière plus spécifique, la station mobile (1) peut gérer, par le biais de son interface (I) de traitement d'entrées, les sélections effectuées par l'utilisateur à partir de menus (M1, M2, M3, M4, M5) affichés par les moyens de visualisation (11).

Dans un mode de réalisation de l'invention, le logiciel d'exploitation associé à l'unité de traitement (15) est élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau (2). A titre d'exemple non limitatif, le traitement du flux audio/vidéo à transférer en temps réel et son transfert peuvent être considérés comme non-prioritaires. Dans ce cas, les fonctions téléphoniques classiques (voix, envoi de messages SMS ou MMS) peuvent se dérouler normalement et ne peuvent pas être ralenties ou empêchées. Le transfert de flux multimédias peut simplement être suspendu par exemple si un appel est reçu ou est déclenché par la station mobile (1).

Les flux sont de différents types en audio mais peuvent reprendre les différents types de codification comme la codification générale « amr ». Les flux vidéo peuvent être de différents types et dépendent du constructeur (RealVideo et RealAudio (RealMedia), MPEG-4, 3gp, vidéo H.263). Plusieurs codages sont utilisés et peuvent aussi inclure la voix (avi, 3gp, etc.).

Pour assurer un transfert de flux audio et/ou vidéo vers l'extérieur de la station mobile (1), cette dernière peut disposer d'une application logicielle en charge de la connexion avec un terminal (3) tel qu'un ordinateur PC ou autre appareil. Une application similaire (30) est prévue dans les moyens de traitement (35) du terminal (3). Pour une utilisation de la station mobile (1) comme caméra, l'application logicielle assure une gestion du flux vidéo et peut permettre de coupler à ce flux vidéo un flux audio enregistré au niveau de la station mobile (1), en fonction des choix de paramétrage. Autrement dit, la station mobile (1) peut constituer une caméra reliée à un grand écran d'un téléviseur (T) ou écran de PC, comme illustré à la figure 2.

En référence aux figures 1, 3A, 3B et 9B, l'interface d'utilisateur (i1, 11) de la station mobile (1) propose un paramétrage du module gestionnaire (12) selon un mode de double gestion de flux. Dans ce mode, le module gestionnaire (12) permet à la fois, lors d'un transfert (E) de flux audio et/ou vidéo vers le terminal local (3), de router des premiers flux audio et/ou vidéo (f1, P1) d'une interface d'entrée de la première interface (101) de communication vers une interface de sortie de la seconde interface (102) de communication et des seconds flux audio et/ou vidéo (P2', f2) d'une interface d'entrée de la seconde interface (102) de communication vers une interface de sortie de la première interface (101) de communication.

L'unité de traitement (12) peut comporter deux ensembles de réception de paquets de données dont l'un est associé à une réception de flux audio et/ou vidéo via la première interface (101) de communication et l'autre est associé à une réception de flux audio et/ou vidéo via la seconde interface (102) de communication. La réception de paquets de données de deux provenances peut aussi être permise par une utilisation en alternance, pendant ledit transfert (E), des flux audio et/ou vidéo via la première interface (101) de communication et des flux de flux audio et/ou vidéo via la seconde interface (102) de communication.

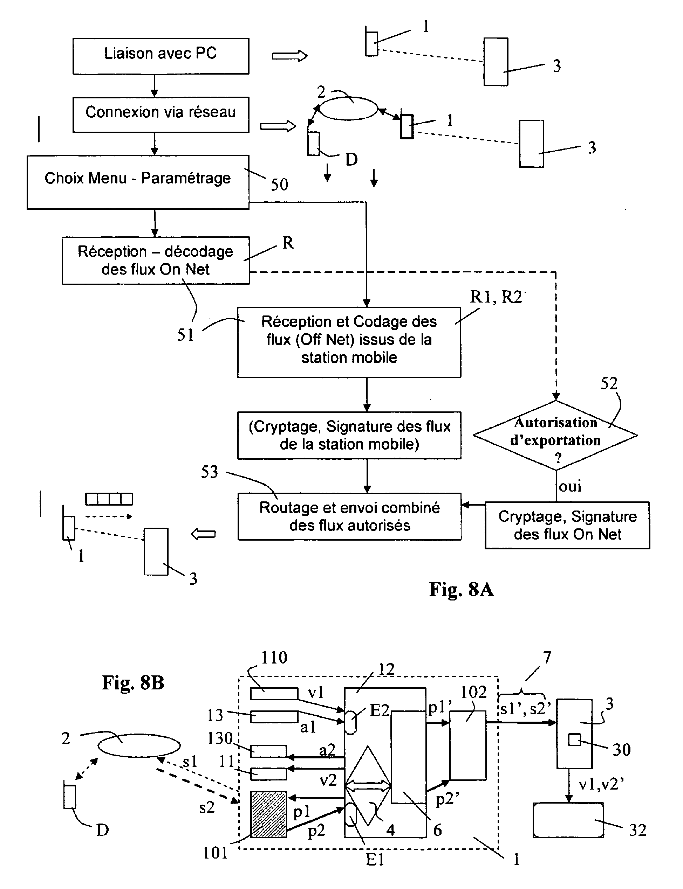

Dans un mode de réalisation préféré de l'invention, la transmission simultanée sur les interfaces de communication (101, 102) est permise sur la station mobile (1). Lorsque les transmissions vers les ports de sortie de la station mobile (1) nécessitent de brasser plusieurs flux (cf. option spécifique choisie dans les menus), le module gestionnaire (12) est capable de ne pas mélanger les signaux vidéos et/ou les paquets de données vidéo entre eux. Dans l'exemple des figures 8A et 8B (voir ci-dessous l'exemple 4), lorsqu'il s'agit de flux en sortie de la station mobile (1) résultant à la fois de la récupération des flux de réseau (ON) et des flux hors réseau (OFF), les systèmes de type USB comportent la possibilité (notamment dans le cadre de flux 'unidirectionnel') d'un transfert de flux mixés avec une différenciation des flux de sortie. Alternativement, le module gestionnaire (12) peut être doté d'une application de fusion de plusieurs images en une image composée, qui inclut par exemple deux zones respectives permettant de restituer chacune les images propres à un seul des deux flux vidéo.

La différenciation des flux de sortie peut être réalisée par une caractérisation des trames en sortie, avec par exemple des identificateurs intégrés dans les trames. Il est permis de la sorte d'extraire de façon séparée les trames de chaque flux vidéo lors de la récupération par l'application gestionnaire (30) du terminal (3) local. L'autre technique consistant à recomposer une image à base des deux flux (On et OFF), notamment en réalisant une division de l'écran virtuel (en 2 ou plus) de sortie, requiert de régénérer au niveau de l'application gestionnaire (30) les séquences de bits nécessaires à la recomposition.

Lorsque la station mobile (1) est paramétrée dans une option requérant une gestion de flux bidirectionnels (flux de réseau (2) ON sortant de la station mobile (1) et flux data entrant ou flux extérieurs/retour entrant (ces flux dits extérieurs étant issus du terminal (3)), le module gestionnaire (12) et les outils de communication de la station mobile (1) doivent permettre ce fonctionnement en discriminant les flux audio et/ou vidéo en fonction de leur provenance. Pour la voix, le système Bluetooth® de type « Kit Main Libre » KML permet ce fonctionnement. Pour les sorties de type USB, l'état de l'art associé aux « Pipes » permet ces traitements.

De plus, des « périphériques virtuels » peuvent aussi être définis en lieu et place des périphériques physiques possibles en connexion par USB. Un programme d'émission et réception du module gestionnaire (12) doit alors traiter et séparer les flux des périphériques virtuels. A titre d'exemple, ce pourrait être le cas des combinés téléphoniques sur port USB pour ordinateur PC.

Dans un mode de réalisation de l'invention, la station mobile (1) comprend un module gestionnaire (12) pour gérer des flux audio et/ou vidéo générés par ou envoyés vers la station mobile (1), et devant ensuite être exportés. Le routage de ces flux ne peut par exemple s'effectuer qu'après une phase d'autorisation. C'est le module gestionnaire (12) qui vérifie, pour les flux audio et/ou vidéo reçus au niveau de la station mobile (1), leur provenance et contrôle ensuite vers quels ports de sortie ces flux peuvent être routés. Pour cela, une vérification est réalisée par consultation d'une base de données (DB) locale afin de vérifier qu'il existe des données d'autorisation d'exportation associées aux flux de la provenance déterminée. Des moyens d'autorisation (4) de routage sont prévus à cet effet dans le module gestionnaire (12). Les autorisations sont par exemple nécessaires pour les sorties vers l'extérieur de la station mobile (1) et peuvent être facultatives lorsqu'il s'agit d'exploiter les flux audio et/ou vidéo pour les restituer par les moyens de restitution propres à la station mobile (1).

La sélection de l'interface de sortie réalisée par l'utilisateur est naturellement prise en compte par le module de gestion (12), qui récupère alors les données d'autorisation d'exportation relatives à l'interface de sortie sélectionnée. Après vérification que le type d'exportation est autorisé, des moyens de routage (6) du module gestionnaire (12) sont activés pour permettre le routage de chaque flux audio et/ou vidéo reçu. Un transfert en temps réel du flux audio et/ou vidéo reçu est ainsi réalisé vers un terminal (3) d'un appareil extérieur à la station mobile (1). Ce transfert en temps réel est effectué pendant une communication entre la station mobile (1) et le terminal (3). La durée de ce transfert peut être limitée en fonction des données d'autorisation.

Pour permettre ce transfert en temps réel, le terminal (3) de communication est par exemple doté d'une application gestionnaire (30) capable d'interpréter, de restituer de façon audiovisuelle, voire de traiter le flux audio/vidéo en provenance de la station mobile (1). On comprend que la station mobile (1) peut être perçue comme un appareil périphérique par le terminal (3), notamment dans les cas où la station mobile (1) est utilisée comme microphone et/ou webcam et autres exemples d'usages sans recours au réseau de radiotéléphonie (usages Off Net).

La station mobile (1) est reliée au terminal (3) local, via IR, Bluetooth® ou liaison filaire USB et fournit à celui-ci un flux audio/vidéo identifié. Il faut alors que ce flux soit interprété et affiché, voire traité. Pour cela, le terminal (3) est équipé d'une application gestionnaire (30) permettant un traitement du flux vidéo entrant pour le restituer directement à l'écran. Cette application (30) peut aussi être complétée par une fonction de téléchargement du module gestionnaire (12) sur la station mobile (1), ou d'émulation (via code opérateur) d'un module analogue au module gestionnaire (12) décrit ci-dessus, déjà présent sur la carte (U)SIM ou module (M) d'identité équivalent. L'application gestionnaire (30) peut se paramétrer par une interface du terminal (3) ou s'aligner en correspondance avec le paramétrage (50) réalisé au niveau de la station mobile (1).

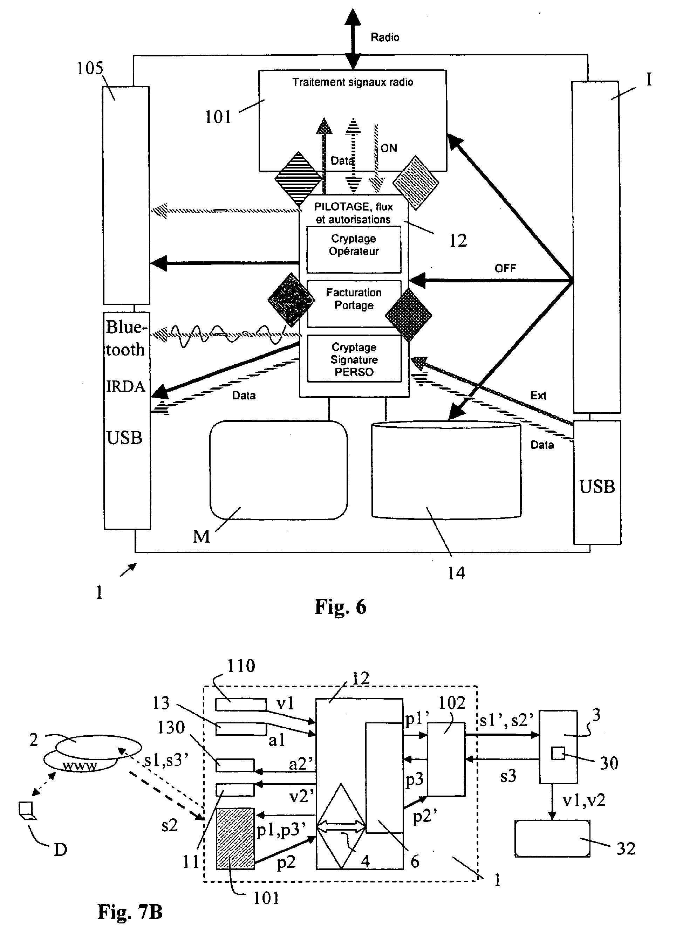

Des exemples d'utilisation de la station mobile (1) dotée du module gestionnaire (12) avec un terminal local (3) doté de l'application gestionnaire (30) vont à présent être présentés en référence aux figures 2 à 9C. Tous ces exemples peuvent être obtenus avec une même station mobile (1) et un même terminal incluant l'application gestionnaire (30). La figure 6 illustre les diverses possibilités de pilotage de flux. On comprend que l'étape de paramétrage (50) peut permettre de faire les choix parmi les options suivantes :
1 - Voix ON ou Voix OFF
2 - Data ON ou Data OFF
3 - Image ON ou- Image OFF.

Par ailleurs, un contrôle des droits (données d'autorisation) peut être réalisé, par exemple sous la forme d'une identification (des flux, de l'abonné..), d'une authentification de la provenance des flux, d'une localisation ou autres options choisies par l'opérateur du réseau de radiotéléphonie (2). Les autorisations peuvent aussi n'être délivrées que spécifiquement pour un type déterminé d'appariement (entre une station mobile et un ou quelques appareils externes seulement).

### Exemple 1 (choix M1 du Menu utilisateur - figure 3A)

En référence à la figure 2, la station mobile (1) peut servir à piloter, router en temps réel (avec ou sans cryptage et/ou signature) des flux générés par la station mobile elle-même. En référence à la figure 3A, une des options numérotée 1 à 3 (Pass Through flux Off Net) est sélectionnée parmi plusieurs options disponibles dans un menu (M1) affiché sur l'écran (11) de visualisation. Le terminal local (3) doit simplement être capable de récupérer ces flux, transférés par exemple via le câble USB. Le déroulement du processus peut se résumer par la succession des étapes suivantes, réalisées au niveau de la station mobile (1) :
- utilisation de dispositifs et fonctions du module gestionnaire (12) à des fins de pilotage pour déterminer l'autorisation du passage en temps réel du flux OFF Net en provenance de la station mobile (1) vers le PC ou terminal (3) local équivalent ;
- traitement de codage et décodage des signaux ;
- utilisation le cas échéant desdits dispositifs et fonctions pour réaliser un cryptage personnalisé en temps réel du flux ;
- utilisation le cas échéant desdits dispositifs et fonctions pour réaliser une signature personnalisée en temps réel du flux ;

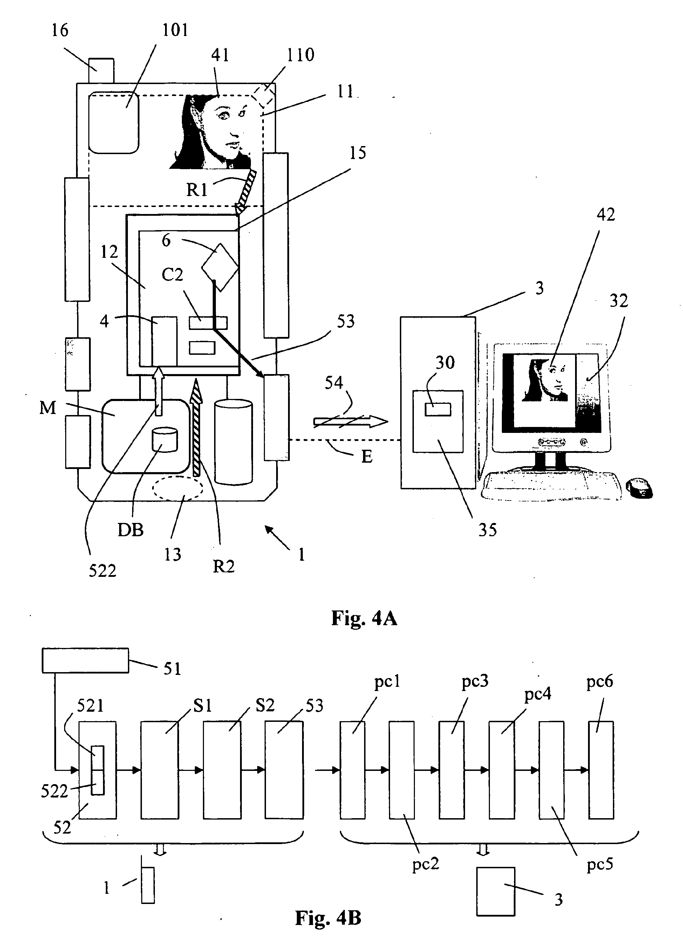

En référence aux figures 4A et 4B, le module gestionnaire (12) peut être associé à des routines sur le module (M) d'identité de la station mobile (1), constitué par exemple d'une carte SIM. Une étape (51) de réception de flux audio et/ou vidéo est réalisée dans une unité de traitement (15) de la station mobile (1). Dès le commencement de cette étape de réception (51), un transfert (E) de flux audio et/ou vidéo vers le terminal (3) peut se déclencher en fonction des options choisies dans le menu (M1). Le procédé prévoit une étape (52) d'autorisation de routage des flux vers l'interface de sortie sélectionnée. Le module gestionnaire (12) peut effectuer pour cela une identification (521) de chaque flux audio et/ou vidéo reçu afin de déterminer une provenance du flux. Le module (12) effectue ensuite une vérification (522) dans une base de données (DB) locale que la station mobile (1) dispose bien de données d'autorisation associées aux flux de ladite provenance déterminée. Cette base de données (DB) locale est par exemple accessible dans le module (M) d'identité amovible constitué par la carte SIM ou carte équivalente. La vérification (522) peut comprendre une lecture, par des moyens de contrôle (4) du module gestionnaire (12), desdites données d'autorisation. La provenance des flux peut être identifiée par l'interface d'entrée par laquelle ces flux sont reçus et/ou par une information contenue dans les flux. Dans l'exemple de la figure 4A, le module de gestion (12) peut identifier que les flux ne proviennent pas de l'extérieur de la station mobile (1) grâce à un identificateur du type de réception (R1, R2). Dans des variantes de réalisation similaires, les données d'autorisation peuvent aussi être stockées dans une mémoire (14) de la station mobile (1) directement accessible par le module gestionnaire (12).

Dans un mode de réalisation de l'invention, le procédé prévoit avant le routage (53) vers l'appareil extérieur, le terminal (3) local dans le cas de la figure 4A, une étape (S1) de cryptage des flux à router par utilisation de moyens de cryptage stockés dans le module (M) d'identité amovible logé dans la station mobile (1). Dans une variante de réalisation, cette étape (S1) de cryptage n'est effectuée que lorsque les flux à router ont été identifiés comme non générés sur la station mobile (1) elle-même. Le procédé peut aussi comporter une étape (S2) de signature des flux à router, par utilisation de moyens de signature stockés dans ledit module (M) d'identité amovible. Cette étape peut également être réalisée seulement si les flux à router ont été identifiés comme générés sur la station mobile (1) elle-même. Dans l'exemple de la figure 4A, un cryptage et une signature ont été réalisés par des moyens (C2) de génération de message du module gestionnaire (12) permettant de former un message codé (54) à transférer vers le terminal (3) local.

A ces dispositifs sur la station mobile (1) est associée l'application gestionnaire (30) sur le PC récepteur ou terminal (3) local équivalent. Cette application (30) permet de réaliser les étapes successives suivantes :
- pilotage (pc1) afin d'autoriser le passage en temps réel du flux en provenance de la station mobile (1).
- acquisition (pc2) du flux ;
- traitement (pc3) du flux ;
- restitution et réglages (pc4) ;
et en complément :
- enregistrement (pc5) ;
- transmission temps réel en sortie (pc6).

### Exemple 2 (choix M2 du Menu utilisateur - figure 3B)

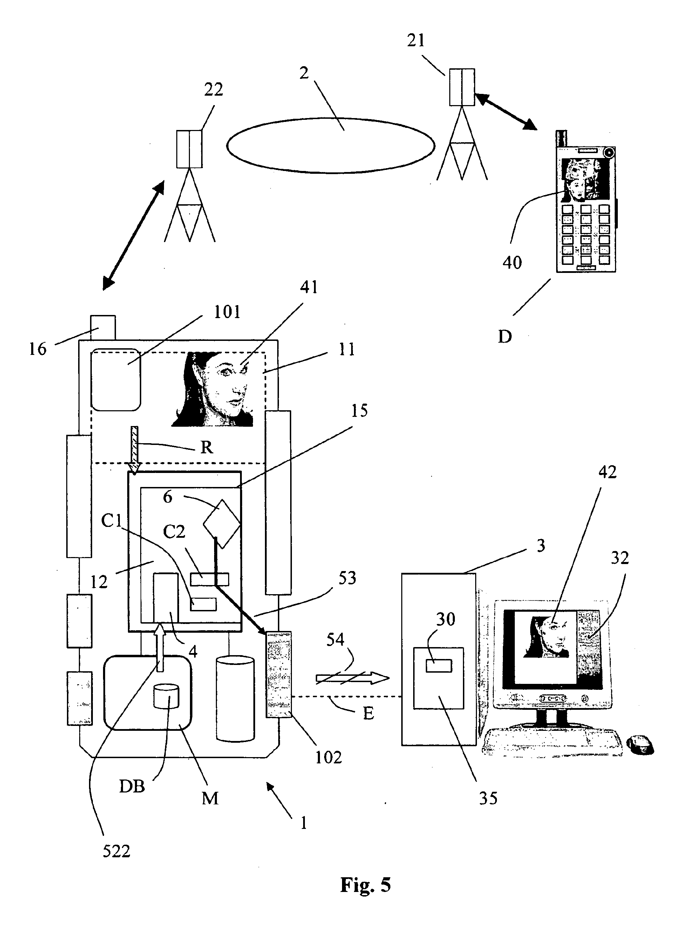

En référence à la figure 5, la station mobile (1) peut servir à piloter, router en temps réel (avec ou sans cryptage et/ou signature) des flux générés par un appareil (D) connecté au réseau (2). Les flux proviennent du réseau (2) cellulaire (flux On Net), via des stations de base (21, 22) respectives, et l'utilisateur souhaite qu'ils sortent vers les dispositifs externes (PC, TV, Réseau), selon une option pouvant s'appeler «flux On Net sortant ». Il n'y a dans ce cas aucun mixage avec les propres flux de la station mobile (1). C'est l'option « Pass Through » des flux On Net (sortant du mobile), que l'utilisateur peut sélectionner dans un menu (M2) affiché sur l'écran (11) de visualisation. Ce type de sélection peut correspondre aussi à une option « kit main libre » comme illustré dans le menu (M2) de la figure 3B. Le déroulement du processus peut se résumer par la succession des étapes suivantes, réalisées au niveau de la station mobile (1) :
- utilisation de dispositifs et fonctions du module gestionnaire (12) à des fins de pilotage et gestion des droits en temps réel;
- traitement de codage et décodage ;
- utilisation le cas échéant desdits dispositifs et fonctions pour réaliser un cryptage propre à l'opérateur en temps réel du flux ;
- utilisation le cas échéant desdits dispositifs et fonctions pour réaliser une signature en temps réel du flux.

On comprend que la provenance du flux peut naturellement être identifiée comme dans l'exemple 1, en détectant le type de réception (R) du flux et/ou une information représentative de la provenance du flux. Dans un mode de réalisation de l'invention, le cryptage et/ou la signature peuvent être réalisés par des dispositifs distincts (C1, C2) du module gestionnaire (12).

A ces dispositifs sur la station mobile (1) est associée l'application gestionnaire (30) sur le PC récepteur ou terminal (3) local équivalent. Cette application (30) permet de réaliser les étapes successives suivantes :
- pilotage (pc1) du flux de réseau (flux On Net), dans lequel l'application gestionnaire (30) autorise ou non le passage en temps réel du flux en provenance de la station mobile (1).
- acquisition (pc2) du flux en cas d'autorisation;
- traitement (pc3) du flux ;
- restitution et réglages (pc4) ;
- enregistrement (pc5) ;
et en complément :
- transmission temps réel en sortie (pc6).

Le fait de pouvoir ressortir de la station mobile (1) des flux de réseau présente un intérêt important pour agrémenter la station mobile (1) de fonctions de type « audio conférence », puisque le signal voix reçu peut-être redirigé vers une régie de son (chaîne Hi-Fi, ou HP, ou autre). De même l'intérêt est aussi de faire profiter de l'image de la station mobile (1) à plusieurs personnes (renvoi sur le PC des images de visiophonie). A titre d'exemple non limitatif, un téléphone mobile (D) de la personne A peut se mettre en connexion de type visiophonie avec la station mobile (1) d'une personne B. Comme illustré à la figure 5, l'image de la personne A peut alors s'afficher dans une fenêtre (40) du téléphone mobile (D) distant et dans une fenêtre (41) sur l'écran (11) de la station mobile (1). Comme la station mobile (1) possédée par la personne B est équipée du module gestionnaire (12) paramétré selon une option de type « Mobile Flow Supplier - Module de gestion de flux - Pass Through des flux On Net » avec une sortie sur écran PC ou TV, alors une image agrandie (42) est obtenue via le dispositif (32) de diffusion associé au terminal (3) local doté de l'application gestionnaire (30).

Concrètement la personne B, après activation/paramétrage du module gestionnaire (12), peut faire bénéficier toute sa famille d'une connexion de visiophonie. Ces usages de flux de réseau (type On Net), qui utilisent et traitent les flux en provenance du réseau (2) opérateur, mettent clairement en évidence un intérêt du procédé selon l'invention, à savoir de piloter et gérer les flux en fonction des choix des utilisateurs et des possibilités offertes par les outils de communication et les opérateurs.

### Exemple 3 (choix M3 du Menu utilisateur - figure 3A)

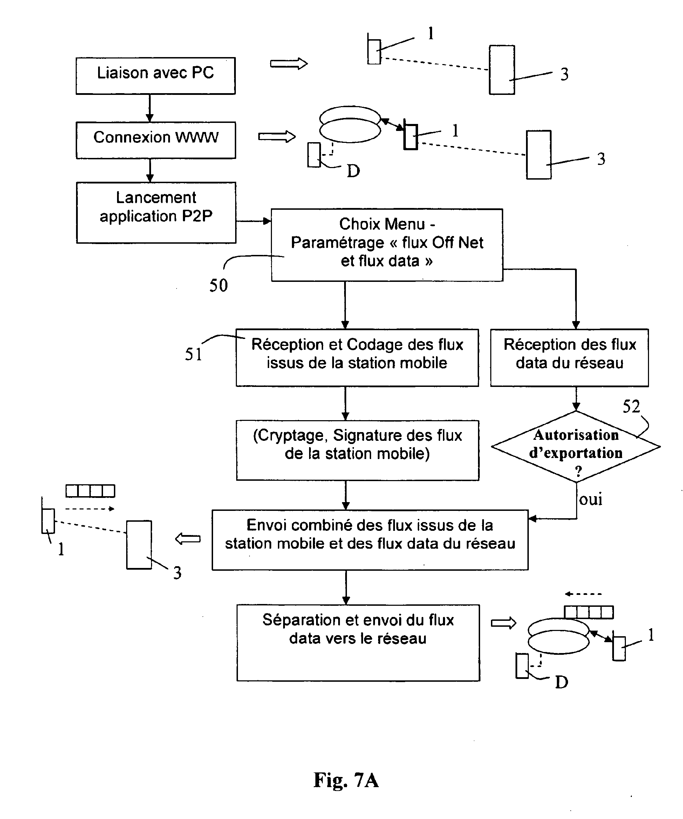

En référence aux figures 7A et 7B, la station mobile (1) peut servir à piloter, router en temps réel (avec ou sans cryptage et/ou signature) des flux générés par la station mobile (1) elle-même avec en complément une gestion des flux de données data de réseau (option : Pass Through flux Off Net et flux data). Cette option peut être sélectionnée via un menu (M3) affiché sur l'écran (11) de visualisation, comme illustré à la figure 3A.

A titre d'exemple non limitatif, c'est le cas d'une session 3G utilisant le modem sur le réseau Internet ouvert sur le PC ou terminal (3) équivalent en utilisant la station mobile comme modem. On y adjoint la possibilité de faire de la station mobile (1) la caméra « webcam » de cette liaison internet. Comme illustré à la figure 7A, le déroulement du processus peut se résumer par la succession des étapes suivantes, réalisées au niveau de la station mobile (1) :
- utilisation de dispositifs et fonctions du module gestionnaire (12) à des fins de pilotage et gestion des droits en temps réel ;
- en cas d'autorisation (52), envoi combiné des flux Off et du flux de données (data) ;
- traitement des flux en retour du terminal (3) local connecté et envoi du flux de données (data) vers le réseau (2) de radiotéléphonie interconnecté avec Internet.

La figure 7B illustre le type de processus réalisé lorsque cette option de routage est choisie. Les signaux (s1, s3') envoyés par la station mobile (1) vers Internet via le réseau (2) de radiotéléphonie peuvent transporter à la fois les flux audio et/ou vidéo (a1, v1) générés au niveau de la station mobile (1) par les dispositifs de capture ainsi que les paquets de données (p3') de retour correspondant aux données (p3) transportées dans un signal (s3) fourni par le terminal local (3). Ces données (p3) sont générées par exemple via un logiciel de type MSN Messenger ou analogue (logiciel de communication poste à poste). Le routage reste contrôlé par le module gestionnaire (12) disposant de moyens (4) d'autorisation de routage.

La station mobile (1) peut éventuellement restituer des images du correspondant distant sur son écran (11) et des sons de ce correspondant sur son haut-parleur (130) via des flux (a2', v2') amenés par paquets (p2) dans un signal radio (s2), comme indiqué dans la figure 7B. Le terminal (3) local réceptionne également des signaux (s2') transportant les paquets (p2') convertis par l'interface (102) reliée au module gestionnaire (12), représentatifs des images et/ou sons délivrés par l'appareil (D) du correspondant distant. Des flux de données (data) peuvent également être échangés entre la station mobile (1) et le terminal (3) local pendant le transfert (E) des flux audio et/ou vidéo.

Les flux vidéo respectifs (v1, v2) du correspondant distant et du possesseur de la station mobile (1) peuvent être transmis au dispositif (32) de diffusion vidéo associé au terminal (3) local, après traitement par l'application gestionnaire (30). Le flux vidéo propre à la station mobile (1) et transmis dans le signal (s1') transporteur de paquets de données (p1') vers le terminal (3) local peut être moins protégé lors du routage que le flux vidéo transmis via le réseau (2) de radiotéléphonie. On comprend que les flux audio associés peuvent être traités de façon analogue, une sélection pouvant permettre de ne restituer au niveau du dispositif (32) qu'un son associé au correspondant distant par exemple.

A ces dispositifs sur la station mobile (1) est associée l'application gestionnaire (30) sur le PC récepteur ou terminal (3) local équivalent. Cette application (30) permet de réaliser les étapes successives suivantes :
- pilotage (pc1) du flux généré au niveau de la station mobile (flux OFF Net), dans lequel l'application gestionnaire (30) autorise ou non le passage en temps réel du flux en provenance de la station mobile (1) ;
- acquisition (pc2) du flux en cas d'autorisation ;
- traitement (pc3) du flux ;
- restitution et réglages (pc4) ;
et en complément :
- enregistrement (pc5) ;
- transmission (pc6) en temps réel en sortie, de l'application gestionnaire (30) vers un dispositif avec protocole IM (messagerie instantanée) ou de type poste à poste « P2P ».

### Exemple 4 (choix M4 du Menu utilisateur - figure 3B)

En référence aux figures 8A et 8B, la station mobile (1) peut servir à mixer en temps réel les flux audio et/ou vidéo en provenance du réseau de radiotéléphonie (2) avec ceux en provenance de la station mobile (2) elle-même. Cette option peut être sélectionnée via un menu (M4) affiché sur l'écran (11) de visualisation, comme illustré à la figure 3B. Le module gestionnaire (12) assure selon cette option des fonctions de portage différencié des flux. Le paramétrage (50) permet à l'utilisateur de sélectionner ou non le portage des flux (a1, v1) générés par les dispositifs (13, 110) de la station mobile et le portage des flux (p2) transportés (dans le signal (s2)) via le réseau de radiotéléphonie (2). Si les données d'autorisation le permettent, une émission (7) de signaux (s1', s2') porteurs de ces différents flux peut être réalisée vers le terminal local (3) et les flux vidéo (v1, v2') notamment pourront être restitués sur un écran d'un dispositif de diffusion (32) associé au terminal (3). L'interface (102) peut convertir les paquets de données (p1', p2') autorisés à être routés en signaux (s1', s2') respectifs à transmettre, par exemple à l'aide d'une liaison USB ou autre liaison à courte distance, au terminal (3) local. L'émission (7) peut correspondre à la transmission d'un signal unique dans lequel sont combinés des signaux (s1', s2') transportant notamment les flux vidéo respectifs. L'émission (7) peut aussi correspondre à un signal transportant dans un même flux A/V les images des deux provenances et éventuellement les sons. Ce flux commun peut ensuite être décomposé par l'application gestionnaire (30) pour restituer les images (et éventuellement les sons) de façon séparée.

En référence encore aux figures 8A et 8B, la station mobile (1) peut servir à piloter, router en temps réel (avec ou sans cryptage et/ou signature) des flux A/V générés par la station mobile (1) elle-même ainsi que des flux A/V issus du réseau (2) (option : Pass Through flux On Net Off Net). A titre d'exemple non limitatif, le paramétrage (50) est réalisé pour que ces flux soient dirigés vers au moins un dispositif externe (PC, TV, Réseau).

Les opérations de cryptage et/ou de signature peuvent ou non être réalisées pour chacun des flux à rediriger vers l'extérieur. Un portage de ces flux est réalisé par le module gestionnaire (12) lorsque les données d'autorisation le permettent. La station mobile (1) peut rediriger les flux Off Net (images et sons captés au niveau de la station mobile) aussi bien vers le terminal (3) local (figure 8B : paquets (p1') et signal (s1') de transport) que vers un appareil (D) distant connecté via le réseau (2) de radiotéléphonie (figure 8B : paquets (p1) et signal (s1) de transport)).

Le dispositif (32) associé au terminal (3) local permet alors de diffuser d'une part des images correspondant aux flux (v1) concernant la personne B possesseur de la station mobile (1), et d'autre part des images correspondant aux flux (v2') extraits du signal (s2') transporteur des paquets de données (p2') qui se rapportent à la personne A possesseur de l'appareil distant (D). La station mobile (1) peut en faire de même d'une part avec les flux OFF (a1, v1) qu'il est permis de rediriger vers l'écran (11) et les haut-parleurs (130), et d'autre part avec les flux On (a2, v2) redirigés via le module gestionnaire (12).

A ces dispositifs sur la station mobile (1) est associée l'application gestionnaire (30) sur le PC récepteur ou terminal (3) local équivalent. Cette application (30) permet de réaliser les étapes successives suivantes :
- pilotage (pc1) des flux de réseau (flux On Net et/ou Off Net), dans lequel l'application gestionnaire (30) autorise ou non le passage en temps réel des flux en provenance de la station mobile (1) ;
- acquisition (pc2) du flux en cas d'autorisation;
- traitement (pc3) du flux ;
- restitution et réglages (pc4) ;
et en complément :
- enregistrement (pc5) ;
- transmission (pc6) en temps réel en sortie, de l'application gestionnaire (30) vers un dispositif avec protocole IM (messagerie instantanée) ou de type poste à poste « P2P ».

Pour les flux de réseau (On Net), il faut notamment rajouter lors du traitement des flux une opération de décryptage de ces flux de réseau.

### Exemple 5 (choix M5 du Menu utilisateur - figure 3A)

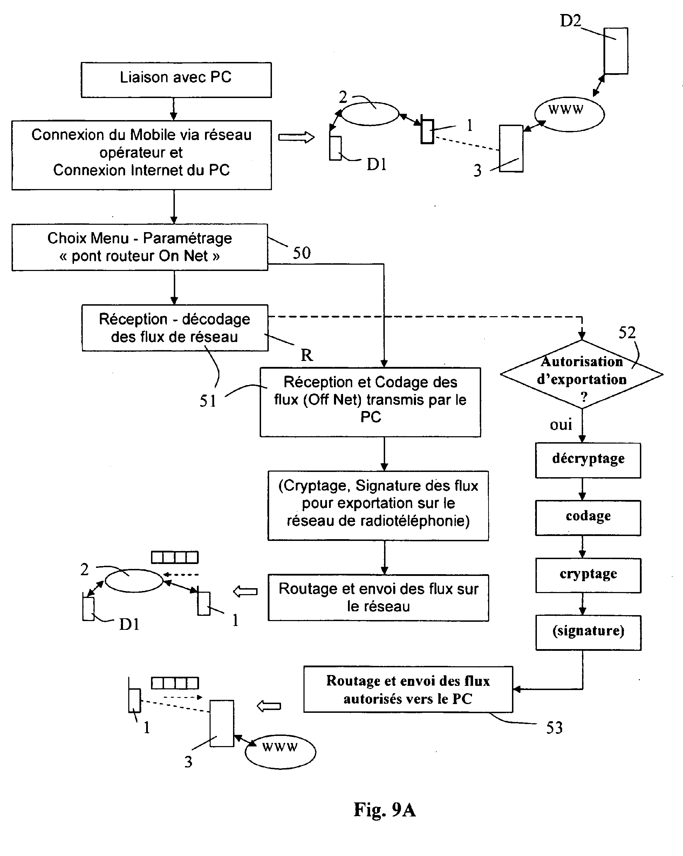

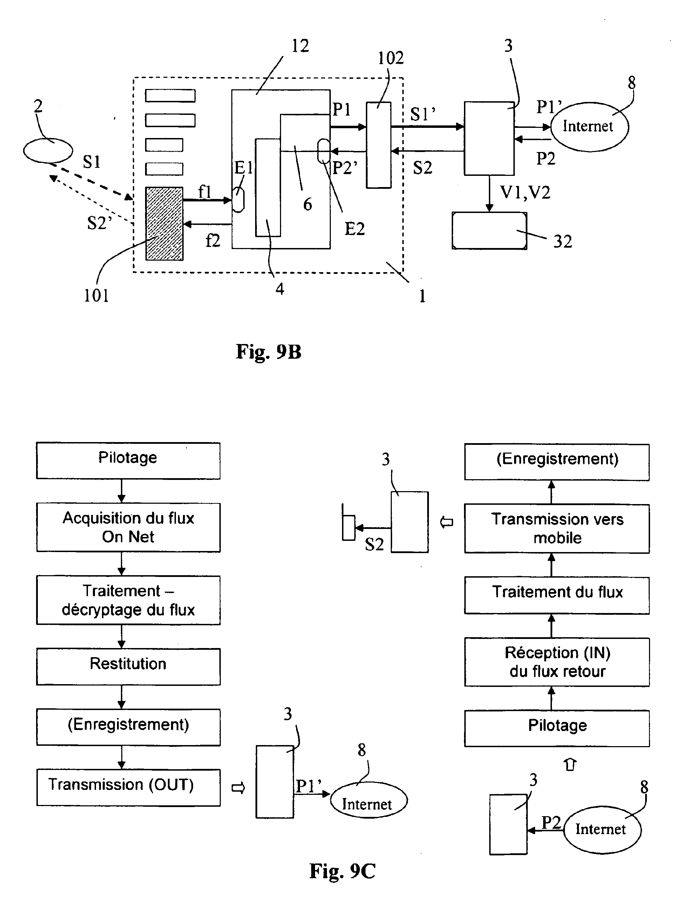

En référence aux figures 9A, 9B et 9C, la station mobile (1) peut servir de pont routeur de flux provenant de ou à diriger vers le réseau de radiotéléphonie (2). Ce type d'option peut être sélectionné via un menu (M5) affiché sur l'écran (11) de visualisation, comme illustré à la figure 3A. La station mobile (1) peut ainsi servir à piloter, router en temps réel (avec ou sans cryptage et/ou signature) des flux A/V issus du réseau (2), avec en supplément la gestion d'un flux de retour externe par exemple en provenance de l'application gestionnaire (30) et le renvoi vers le réseau (2) d'opérateur (c'est l'option : « Pass Through » Pont Routeur). A titre d'exemple non limitatif, le paramétrage (50) est réalisé pour permettre une mise en relation d'un PC ou appareil distant (D2) équivalent en communication sur Internet (8), avec un appareil (D1) mobile communiquant avec le réseau (2) de radiotéléphonie. La station mobile (1) constitue un dispositif intermédiaire servant de pont entre les deux infrastructures de réseau (2, 8).

Le déroulement du processus peut inclure les étapes successives suivantes, réalisées au niveau de la station mobile (1) :
- utilisation de dispositifs et fonctions du module gestionnaire (12) à des fins de pilotage ;
- réception et décodage des flux transportés dans les signaux (S2) en provenance du terminal (3) local ;
- utilisation de dispositifs et fonctions de décryptage et/ou signature (facultatif) ;
- envoi de signaux (S2') de transport des flux (f2) autorisés vers le réseau (2) de radiotéléphonie, après éventuellement un codage et/ou un cryptage et/ou une signature.

Parallèlement, le flux (S1) en provenance du réseau (2) subit un traitement analogue pour être envoyé sous la forme d'un signal (S1') au terminal local (3) qui va aiguiller les paquets de données (P1') ainsi reçus vers l'appareil distant (D2) connecté au réseau Internet (8), comme illustré à la figure 9B.

Comme illustré à la figure 9C, à ces dispositifs sur la station mobile (1) est associée l'application gestionnaire (30) sur le PC récepteur ou terminal (3) local équivalent. Cette application (30) permet de réaliser les étapes successives suivantes, relatives à la gestion des flux (f1) de réseau :
- pilotage du flux généré au niveau de la station mobile (flux OFF Net), dans lequel les dispositifs et fonctions appliqués au pilotage du flux de réseau sont utilisés pour autoriser ou non le passage en temps réel du flux (S1) en provenance de l'appareil (D1) mobile ;
- acquisition du flux de réseau (On Net) ;
- traitement du flux ;
- restitution et réglages (facultatif) ;
- enregistrement (facultatif) ;
- transmission temps réel en sortie, dans laquelle le signal (S1') est fourni au terminal (3) local avant d'être dirigé vers l'appareil distant (D2) connecté au réseau Internet (8).

Parallèlement comme illustré à la figure 9C, pendant le transfert (E) vers le terminal (3) local, l'application gestionnaire (30) permet de réaliser les étapes successives suivantes, relatives à la gestion de flux extérieurs à l'ensemble station mobile-réseau :
- pilotage ;
- réception du signal (S2) véhiculant le flux externe ou flux de retour ;
- traitement du flux externe, pouvant inclure une extraction en temps réel des paquets de données (P2) reçus avec le signal (S2) par l'application gestionnaire (3) ;
- transmission en temps réel vers la station mobile (1) des paquets de données (P2) reçus, ces derniers étant transportés dans un signal (S2) fourni à la station mobile (1) qui va extraire les paquets (P2') correspondants pour les transférer ensuite vers l'appareil distant (D2) connecté au réseau Internet (8).

Le procédé peut comporter un enregistrement par le module gestionnaire (12) des paquets (P2') récupérés par la seconde interface (102). Les flux (f2) audio et/ou vidéo autorisés lors de l'étape d'autorisation de routage (52) sont routés vers la première interface (101) pour être envoyés à travers le réseau (2) à l'appareil (D1) mobile distant.

Comme illustré à la figure 3A, la station mobile (1) en tant que pont routeur peut avantageusement servir dans les cas suivants :
- communication de type Visiophonie, avec transfert de la station mobile vers le terminal local (3) ;
- mise en correspondance d'un correspondant Web et d'un correspondant possesseur d'un appareil (D1) de type téléphone mobile (D1) ;
- visioconférence à 3.

A la vue de ces différents exemples 1 à 5 pouvant être mis en oeuvre avec une station mobile selon l'invention (1), on perçoit l'intérêt du pilotage et de la gestion des flux à router dans l'optique d'utiliser de façon croissante des applications du domaine multimédia.

Dans le cas de l'usage de la station mobile (1) comme microphone et/ou webcam (et exemples des usages Off Net), on comprend que la station mobile (1) dispose d'outils de récupération et de mise à disposition des flux audio et vidéo générés. La station mobile (1) disposant de façon intrinsèque des dispositifs de capture (110, 13), le module gestionnaire (12) est alors prévu pour récupérer (à la volée en temps réel) les flux générés (a1, v1) et de les envoyer au moyen d'un flux vidéo et/ou audio sur les interfaces de sortie. A titre d'exemple non limitatif, ces flux seront envoyés via une sortie IR (Infra-Rouge) ou Bluetooth® ou USB.

Les possibilités de paramétrage du module gestionnaire (12) sont accessibles via l'interface (I) de la station mobile et/ou via une interface du terminal (3) local, associée par exemple à l'application gestionnaire (30). Ce module (12) peut être téléchargé sur la station mobile (1) par des fonctions de téléchargement via service SMS (Short Message Service), via le chargement par le terminal (3) local connecté à la station mobile (1). Alternativement, ce module (12) peut être directement inclus (embarqué) sur la carte SIM ou module (M) d'identité analogue. Dans ce dernier cas la fonction de routage permise par le module gestionnaire (12) pourra être ouverte notamment par fourniture d'un code de protection obtenu par le client auprès de son opérateur. Des mises à jour peuvent être réalisées, via le réseau (2) ou via une connexion avec l'application gestionnaire (30) présente dans le terminal local (3).

Le pilotage des flux peut être adapté en fonction des capacités des voies de destination (car les possibilités offertes varient suivant les dispositifs : infrarouge, Bluetooth® ou USB). L'utilisateur ayant obtenu la possibilité d'utiliser cette fonction de routage, pourra la mettre en service quand la station mobile (1) sera connectée à un terminal (3) local doté de l'application gestionnaire (30) qui assure les fonctions de récupération/connexion. Cette dernière déclenche en outre l'affichage des images et la diffusion des sons. Ce type de récupération est connu en soi et est notamment décrit dans les documents US 2006/0103721 et US 2006/0158439.

La station mobile étant reliée au terminal (3) local, via liaison IR, Bluetooth® ou filaire USB et fournissant un flux audio/vidéo identifié, on comprend qu'il ne reste plus qu'à l'interpréter, l'afficher, voire le traiter (dans le cas ou le flux est crypté). C'est le rôle de l'application gestionnaire (30), qui est reliée aux interfaces adéquates du terminal (3) avec les dispositifs de diffusion des informations audio et/ou vidéo. Cette application gestionnaire (30) peut être téléchargée à partir d'un site Web (opérateur ou autre). Celle-ci prend en compte certains paramètres requis pour un bon fonctionnement : traitement des fréquences des signaux d'entrée, identification des flux, bande du signal USB, source, format des codages, résolutions initiales.

De nombreuses fonctionnalités complémentaires peuvent être ajoutées au module gestionnaire (12) présent dans la station mobile (1), à savoir : logiciel de traitement du flux (enregistrement, transcodage, etc.), interface avec les outils de type « Messenger » du marché, comme peut l'apprécier l'homme du métier.

Une identification des flux est réalisée dans un mode de réalisation de l'invention. La carte SIM ou module (M) d'identité équivalent peut permettre de fournir les données d'autorisation en fonction des flux identifiés. Dans ce cas, les données d'autorisation associent par exemple des autorisations de routage à une liste d'identificateurs de flux dans la base de données (DB). Une table d'autorisation peut ainsi être constituée dans la base de données (DB).

### 1. Cas des flux qui ne viennent pas du réseau (2) ou Flux OFF

La sortie contrôlée et/ou cryptée et/ou signée des flux nécessite un mécanisme d'identification des flux au niveau de la station mobile (1). Cette identification est facultative pour les flux OFF, qui ne sont pas censés générer des possibilités de « perte de revenus » pour les opérateurs. Le procédé peut par ailleurs comporter lors du transfert (E) une étape de facturation de droits de passage en fonction des données (pouvant inclure par exemple des données commerciales) récupérées lors de la vérification (522).

Le module gestionnaire (12) peut faire partie des programmes de la station mobile (1) ou peut être récupéré du module (M) d'identité amovible et exécuté par l'Operating System de la station mobile (1). Dans ce dernier cas, l'OS temps réel de la station mobile (1) qui contient le module gestionnaire (12) adapté à ce cas (Off Net) gère les évènements qui lui parviennent en provenance par exemple des capteurs et circuits « chipsets » (identifiés par leur adresse) en charge de récupérer les données voix et image du microphone et de la caméra de la station mobile (1). Le traitement des flux identifiés est alors possible.

Dans un mode de réalisation de l'invention, le module gestionnaire (12) est déclenché par l'utilisateur dans un menu ou une liste déroulante affiché sur l'écran (11) de la station mobile (1). Il est permis ensuite de choisir le système de transport utilisé (Bluetooth® ou USB), le module (12) gérant les flux de transfert. Ce module gestionnaire (12) permet aussi de faire appel à un module de cryptage ou de signature (C1, C2) qui peut lui-même demander à la carte SIM ou module (M) d'identité des informations (IMEI, clé secondaire ou autres).

Par ailleurs, lors de l'installation du module gestionnaire (12), un module du terminal (3) local, formant par exemple des moyens d'appariement de l'application gestionnaire (30) avec un module gestionnaire de téléphone mobile, peut se mettre en relation avec la station mobile (1) et échanger des informations utiles à la personnalisation ou cryptage (numéro de PC, adresse MAC du PC cible, numéro MS-ISDN de la station mobile (1), mot de passe d'utilisateur, ou autre). On peut parler dans ce cas de verrouillage du terminal (3) de type « Simlock ».

Fort de tous ces éléments échangés, lorsqu'une application 'Flux Off' du module gestionnaire (12) est lancée sur la station mobile (1), l'appel aux fonctionnalités liées à la carte SIM ou module (M) d'identité devient possible et permet de nombreuses possibilités de contrôle et de sécurité. L'utilisateur ne pourra donc pas faire sortir librement des flux audio et/ou vidéo issus du réseau pour les diffuser vers d'autres appareils, notamment des appareils distants connectés via le réseau Internet. Ce n'est qu'avec une autorisation de l'opérateur qu'un tel transfert devient possible, par exemple parce que l'utilisateur possède une formule d'abonnement auprès du réseau (2) de radiotéléphonie qui prévoit cette possibilité.

### 2. Cas des flux des flux de réseau ou flux ON, des flux de données Data et combinaison de tels flux

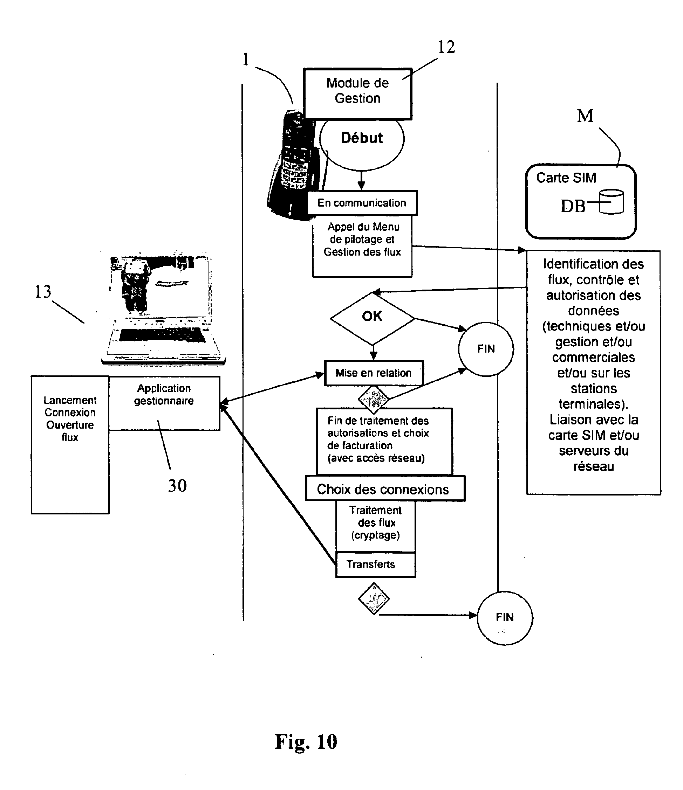

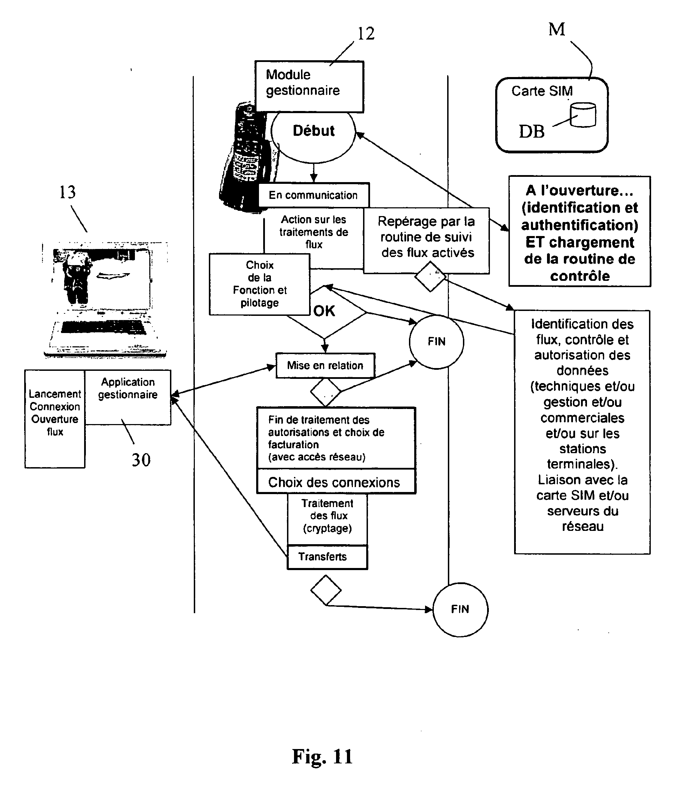

A titre d'exemple nullement limitatif, deux scénarii de contrôle et de pilotage peuvent être proposés, comme illustré dans les figures 10 et 11. La figure 10 se rapporte à un scénario de contrôle dit « faible » et la figure 11 à un scénario de contrôle dit « fort ».

### 2A. Principe du scénario de « contrôle faible » :

Ce scénario va être décrit avec l'exemple de sortie des flux de réseau (2) venant de l'opérateur en temps réel vers un appareil extérieur (3, D2) à la station mobile (1). L'utilisateur étant en communication, il choisit une option de type « voir son correspondant sur PC » dans un menu (M2 ; figure 3B) déroulant affiché à l'écran (1) de la station mobile (1). Cette option correspond à une fonctionnalité du module gestionnaire (12) pour router de manière spécifique les flux ON de réseau.

Un programme s'exécute alors. Ce programme est soit téléchargé de la carte SIM ou module (M) d'identité, soit présent sur la station mobile (1) (et exécuté sur l'OS de la station mobile - de par les accords avec le fabricant...). Le programme ainsi exécuté sur la station mobile (1) fait appel à des routines sur la carte SIM. Dans le mode de réalisation de la figure 10 pour lequel la station mobile doit passer la main, une première étape dite étape d'autorisation de routage (52) consiste à vérifier les droits sur la carte SIM :
- vérification que l'option flux "F" ON vers port de sortie est ouverte ou non par l'opérateur ;
- le droit à cette option peut dépendre de la géolocalisation (le traitement de la géolocalisation étant finalisé ou non en direct sur la station mobile (1) en fonction des informations de la carte SIM) ;
- l'option peut être fonction du terminal local (3) connecté (coordonnées du PC déclaré par l'application (30) gestionnaire) : c'est le PC Simlock ;
- l'option peut être fonction de données commerciales, à savoir si l'utilisateur est aussi un client « abonné » au réseau fixe (sur lequel est connecté le terminal local (3)), en complément de l'accès au réseau opérateur.

Dans le cas du verrouillage de l'option en fonction de l'appariement ou non de la carte SIM au terminal (3) local, des droits peuvent être obtenus et par exemple téléchargés par l'opérateur via un chargement réseau ou un SMS. La récupération de droits limités peut se faire sous la forme d'une facturation à l'acte ou au compteur en utilisant un serveur du réseau opérateur (procédé technique de type IN ou équivalent).

Les données du kit PC Simlock sont récupérées lors d'une installation préalable, comme peut l'apprécier l'homme du métier.

Si le ou les droits sont obtenus, une deuxième étape consiste à piloter les flux. Cette étape peut correspondre à un paramétrage (50) réalisé par l'utilisateur et ou défini dans un fichier configuration associé à l'option de routage, avec par exemple les choix suivants :
- choix audio avec cryptage ou signature ;
- choix vidéo avec cryptage ou signature.

Ensuite les flux peuvent être traités en fonction des adresses des périphériques qui les envoient et de celles à qui les signaux sont destinés, en respect des couches données (data) communication associées. On comprend dans ce cas que la mise en oeuvre de la solution et les options accordées dépendent fortement des accords entre opérateurs et équipementiers de terminaux mobiles. Le contrôle exercé peut être suffisant pour s'assurer que des flux audio et/ou vidéo ne vont pas être détournés sans que l'opérateur puisse s'en apercevoir.

### 2B. Principe du scénario de « contrôle fort » des flux ON et entrants :

En reprenant le même exemple que précédemment, le procédé prévoit dans ce fonctionnement deux traitements complémentaires comme illustré à la figure 11. Tout d'abord, et avant les communications, lors de la phase d'identification et d'authentification sur le réseau (2) de radiotéléphonie, qui est une étape classique où il est fait appel aux éléments de la carte SIM, il est prévu d'adjoindre en fin de séquence le chargement en mémoire d'une routine complémentaire de « contrôle fort ». Cette routine complémentaire est déjà préparée sur la carte SIM, l'opérateur ayant pu l'insérer soit à la fabrication de la carte SIM soit par téléchargement (via SMS ou autre).

Les moyens (4) d'autorisation de routage du flux utilisent alors ce type de routine. Lors de l'usage de la station mobile (1) identifiée et connectée, cette routine a pour fonction de façon régulière et en tâche de fond :
- d'identifier les flux en cours de traitement (examen des flux et piles des circuits chipsets associés) ;
- repérer lorsque des flux de réseau (flux ON) sont en cours de traitement pour des sorties éventuelles via des interfaces externes ;
- repérer lorsque des flux entrants sont en cours d'acquisition (Bluetooth®, IR, USB).

Dans un mode de réalisation de l'invention, cette routine déclenche lors de la détection des flux à surveiller une sous-routine d'interrogation de la carte SIM. Une première étape consiste à vérifier les droits sur la carte SIM :
- vérification que l'option flux "F1" ON vers le port de sortie est ouverte ou non par l'opérateur ;
- vérification que l'option flux "F2" entrant via la seconde interface (102), comme par exemple un port d'entrée USB ou Bluetooth®, est possible ;
- vérification supplémentaire si l'option flux "F2" entrant est fonction de la géolocalisation (la finalisation du traitement de géolocalisation étant effectuée au besoin sur la station mobile (1)) ;
- vérification supplémentaire si l'option est fonction du terminal local (3) connecté (coordonnées du PC déclaré par l'application (30) gestionnaire) : c'est le PC Simlock ;
- vérification supplémentaire si l'option est fonction de données commerciales (comme l'abonnement du client à un réseau fixe lui-même ayant passé un accord ou dépendant de l'opérateur du réseau mobile).

Dans le cas du verrouillage de type PC Simlock, les droits récupérés sont téléchargés par l'opérateur via un chargement réseau ou un SMS ; les données du matériel PC Simlock sont récupérées lors d'une installation préalable.

La récupération de droits limités peut se faire sous la forme d'une facturation à l'acte ou au compteur en utilisant un serveur du réseau opérateur (procédé technique de type IN ou équivalent).

L'application gestionnaire (30) peut alors être exécutée sur demande de l'utilisateur, mais elle est contrôlée de fait par la routine de « contrôle fort ». Les autres traitements (cryptage, signature) et traitement des flux peuvent se réaliser. Le décryptage peut être fonction des outils employés, mais peut se limiter à une clé fournie par l'utilisateur, ou une clé fille générée par la carte SIM de la station mobile (1). Avec ce second scénario, il est permis de faire jouer à la carte SIM ou module (M) d'identité analogue, des fonctions complémentaires de contrôle en association avec le module gestionnaire (12), avec une détection et identification des mouvements de flux à travers la station mobile (1).

Un des avantages du procédé selon l'invention est de permettre une combinatoire entre les flux de façon contrôlée. Un listage des appareils autorisés, avec lesquels des transferts de flux multimédias sont permis, peut être réalisé. Ainsi, du point de vue de l'opérateur d'un réseau de radiotéléphonie des informations audio et/ou vidéo ne peuvent pas être "perdues" par des transferts incontrôlés vers l'extérieur (par exemple la sortie USB, qui permet des débits élevés pour les flux A/V, ne peut servir à dérouter des flux multimédias sans autorisation à cet effet). De plus, un mécanisme d'identification des flux peut être prévu dans la station mobile, ce qui permet de vérifier pour des informations issues du réseau (On Net) que la sortie des flux est bien contrôlée et/ou cryptée et/ou signée.

On comprend que le routage des flux audio et/ou vidéo, grâce à la présence d'un routeur ou d'un pont intégré dans la station mobile (1) de radiocommunication, permet un élargissement du périmètre des applications mobiles. Cela facilite en outre la convergence (à partir du téléphone mobile) des flux des appareils de communication, avec une optimisation des coûts pour les utilisateurs. Par ailleurs, le contrôle exercé sur les flux sortant du réseau de radiotéléphonie (2) permet à l'opérateur de remplir au mieux ses obligations légales et réglementaires concernant l'ensemble des communications qu'il doit signaler sur requête de l'Etat, par exemple dans un cadre administratif ou judiciaire. Ces différents avantages contribuent à développer la croissance des applications du domaine multimédia et à renforcer l'intérêt pour des appareils multifonctions comme des mobiles PDA et autres appareils portables (impacts immédiats sur les applications Voix - Image et photo - séquence vidéo - TV).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

## Revendications

1. Procédé de routage de flux multimédias à l'aide d'une station mobile (1) de radiocommunication dotée d'une première interface (101) de communication avec un réseau de radiotéléphonie (2), comprenant une étape (E) de transfert de flux audio et/ou vidéo entre la station mobile (1) et au moins un terminal (3) local de communication par utilisation d'une seconde interface (102) de communication de la station mobile (1), une étape (51) de réception de flux audio et/ou vidéo étant réalisée dans une unité de traitement (15) de la station mobile (1) pendant ladite étape (E) de transfert, le procédé comprenant en outre une étape de gestion par un module gestionnaire (12) de l'unité de traitement (15) de chaque flux audio et/ou vidéo reçu, **caractérisé en ce qu'**il comporte :
- une étape (50) de paramétrage du module gestionnaire (12) à l'aide d'une interface d'utilisateur (i1, 11) de la station mobile (1) pour sélectionner au moins une interface de sortie d'une des interfaces de communication (101, 102, 103) de la station mobile (1) ;
- une étape (52) d'autorisation de routage du flux à travers ladite interface de sortie sélectionnée, comprenant une étape (521) d'identification par le module gestionnaire (12) de chaque flux audio et/ou vidéo reçu pour permettre de déterminer une provenance du flux et une étape (522) de vérification dans une base de données (DB) locale que la station mobile (1) dispose d'une autorisation pour exporter les flux, cette autorisation étant déterminée au moins en fonction de leur provenance, à partir de données d'autorisation d'exportation associées aux flux de ladite provenance déterminée ; et
- une étape (53) de routage par des moyens de routage (6) du module gestionnaire (12), de chaque flux audio et/ou vidéo reçu, permettant une transmission en temps réel du flux audio et/ou vidéo reçu vers au moins un terminal (3) local extérieur à la station mobile (1) pendant ladite étape (E) de transfert, ce terminal (3) destinataire du transfert du flux pendant cette étape (53) de routage étant déterminé en fonction de l'étape (50) de paramétrage et de l'étape (522) de vérification des données d'autorisation d'exportation.

2. Procédé selon la revendication 1, dans lequel l'interface de sortie sélectionnée lors de l'étape (50) de paramétrage est choisie parmi plusieurs interfaces de sortie dont l'une correspond à l'interface de sortie de la première interface (101) de communication.

3. Procédé selon la revendication 1 ou 2, comprenant lors de l'étape de transfert (E) :
- une étape de réception par le terminal (3) d'un signal (s1', s2', S1') transportant des paquets de données correspondant au(x) flux transféré(s) par la station mobile (1) ;
- une étape de conversion du signal (s1', s2', S1') reçu, par des moyens de conversion du terminal (3) ; et
- une étape de traitement des flux par une application gestionnaire (30) du terminal (3) pour restituer et diffuser localement des signaux audio et/ou vidéo (v1, v2', v2, V1, V2) via un dispositif (32) de diffusion audio et/ou vidéo connecté localement au terminal (3), et/ou
- une étape d'enregistrement de paquets de données correspondant au(x) flux transféré(s), obtenus lors de l'étape de conversion, et/ou
- une étape de routage, par une application gestionnaire (30) du terminal (3), des paquets récupérés vers une adresse IP déterminée pour transmettre ces paquets à un appareil distant (D2) connecté au réseau Internet (8) suivie par
- une étape d'envoi vers l'appareil distant, via une seconde interface du terminal (3), de paquets transportant le(s) flux transféré(s) par la station mobile (1).

4. Procédé selon une des revendications 1 à 3, dans lequel l'étape (53) de routage vers l'appareil extérieur comprend une étape de facturation de droits de passage en fonction des données d'autorisation récupérées lors de l'étape (522) de vérification.

5. Procédé selon la revendication 1 à 4, comprenant un stockage de données de gestion et/ou commerciales complémentaires sur le client dans ladite base de données (DB) du module (M) d'identité, ces données complémentaires pouvant être vérifiées dans des bases de données externes.

6. Procédé selon une des revendications 1 à 5, dans lequel l'étape (52) d'autorisation de routage comprend :
- une étape de contrôle de localisation de la station mobile (1), incluant une réception par la station mobile (1) de données de localisation, les données d'autorisation d'exportation comportant des données relatives à des localisations autorisées, l'étape (53) de routage n'étant déclenchée que si les données de localisation de la station mobile (1) coïncident avec une zone de localisation autorisée définie par les données d'autorisation, et/ou
- une étape de contrôle de l'appartenance de l'utilisateur à une communauté d'un réseau destinataire des flux, les données d'autorisation d'exportation comportant des informations relatives à des données de gestion et/ou commerciales, cette étape comportant un contrôle effectué sur des données de gestion et/ou commerciales fournies par l'opérateur dudit réseau destinataire.

7. Procédé de routage de flux multimédias à l'aide d'une station mobile (1) de radiocommunication dotée d'une première interface (101) de communication avec un réseau de radiotéléphonie (2), selon une des revendications 1 à 6, comprenant :
- une étape (E) de transfert de flux audio et/ou vidéo entre la station mobile (1) et un terminal (3) local de communication par utilisation d'une seconde interface (102) de communication de la station mobile (1),
- une étape (51) de réception de flux audio et/ou vidéo étant réalisée dans une unité de traitement (15) de la station mobile (1) pendant ladite étape (E) de transfert,
- une étape de gestion par un module gestionnaire (12) de l'unité de traitement (15) de chaque flux audio et/ou vidéo reçu, **caractérisé en ce qu'**il comporte :
- une réception simultanée, par des moyens de réception du module gestionnaire (12), lors de l'étape de réception, de deux flux essentiellement vidéo ou associés à un flux audio, un seul desdits flux vidéo étant reçu via la première interface (101) de communication,
- une étape d'identification d'une provenance de chaque flux,
- une étape de vérification par une lecture, réalisée par des moyens de contrôle (4) du module gestionnaire (12), dans une base de données (DB) d'un module d'identité amovible logé dans la station, de données d'autorisation de routage associées à ladite provenance,
- une étape d'autorisation de routage,
- une étape de routage (53), en cas d'autorisation, incluant un aiguillage par des moyens de routage (6) desdits deux flux vidéo vers au moins un port de sortie dont l'un appartient à la seconde interface (102) de communication pour permettre ladite étape (E) de transfert.

8. Procédé selon une des revendications 1 à 7, dans lequel l'aiguillage est effectué vers un unique port de sortie de la seconde interface (102) de communication, l'étape de routage (53) comprenant une étape de combinaison desdits deux flux vidéo au niveau de la seconde interface (102) de communication.

9. Procédé selon une des revendications 1 à 8, dans lequel l'étape de réception simultanée est réalisée dans le module gestionnaire (12) par deux ensembles distincts (E1, E2) de réception de paquets de données dont l'un (E1) est associé à une réception de flux vidéo et éventuellement audio (f1) via la première interface (101) de communication et l'autre (E2) est associé à une réception de flux vidéo et éventuellement audio (P2') via la seconde interface (102) de communication.

10. Procédé selon la revendication 8 ou 9, dans lequel l'étape de réception simultanée est réalisée dans le module gestionnaire (12) par deux ensembles distincts de réception de paquets de données dont l'un est associé à une réception de flux vidéo et éventuellement audio (p2) via la première interface (101) de communication et l'autre est associé à une réception de flux vidéo et éventuellement audio (a1, v1) générés par des dispositifs (13, 110) de la station mobile (1).

11. Procédé selon une des revendications 1 à 10, dans lequel l'étape de routage (53) est précédée d'une étape de fusion des deux flux vidéo, par des moyens de fusion du module gestionnaire (12), pour obtenir des images composées avec des sous-images séparées correspondant aux flux vidéo respectifs.

12. Station mobile (1) de radiocommunication pour piloter un routage de flux multimédias, comprenant une première interface (101) de communication avec un réseau de radiotéléphonie (2), une seconde interface (102) de communication permettant un transfert (E) de flux audio et/ou vidéo entre la station mobile (1) et au moins un terminal (3) local de communication, une unité de traitement (15) permettant de réceptionner des flux audio et/ou vidéo pendant ledit transfert (E), et un module gestionnaire (12) dans l'unité de traitement (15) pour gérer chaque flux audio et/ou vidéo reçu, **caractérisée en ce qu'**elle comporte une interface d'utilisateur (i1, 11) pour paramétrer le module gestionnaire (12) par sélection d'une option de routage et une base de données (DB) locale stockant des données d'autorisation associées à une provenance des flux à router, l'interface d'utilisateur (i1, 11) permettant de sélectionner au moins une interface de sortie d'une des interfaces de communication (101, 102, 103) de la station mobile (1), le module gestionnaire (12) comprenant :
- des moyens (4) d'autorisation de routage du flux à travers l'interface de sortie sélectionnée, aptes à identifier chaque flux audio et/ou vidéo reçu pour permettre de déterminer une provenance du flux et à vérifier dans la base de données (DB) locale que la station mobile (1) dispose d'une autorisation pour exporter les flux, cette autorisation étant déterminée au moins en fonction de leur provenance, à partir de données d'autorisation d'exportation associées aux flux de ladite provenance déterminée ; et
- des moyens (6) de routage de chaque flux audio et/ou vidéo reçu, permettant une transmission en temps réel du flux audio et/ou vidéo reçu vers au moins une terminal (3) local extérieur à la station mobile (1) pendant ledit transfert (E), les moyens (6) de routage étant activés en fonction de l'option de routage sélectionnée par les moyens (4) d'autorisation après récupération desdites données d'autorisation, le terminal (3) destinataire sélectionné par ces moyens (6) de routage étant déterminé en fonction du paramétrage du module gestionnaire (12) et des moyens (4) d'autorisation.

13. Station mobile (1) selon la revendication 12, dans laquelle l'interface d'utilisateur (i1, 11) comprend un écran affichant dans au moins un menu plusieurs choix d'interfaces de sortie dont l'une correspond à l'interface de sortie de la première interface (101) de communication.

14. Station mobile (1) selon la revendication 12 ou 13, comprenant un module (M) d'identité amovible logé à l'intérieur d'un boîtier de la station amovible, le module (M) d'identité incluant :
- des moyens de cryptage utilisables par le module gestionnaire (12) pour crypter des flux à router lorsque ces flux ont été identifiés comme non générés sur la station mobile (1) elle-même.
- des moyens de signature utilisables par le module gestionnaire (12) pour signer des flux à router lorsque ces flux ont été identifiés comme non générés sur la station mobile (1) elle-même.

15. Station mobile (1) selon une des revendications 12 à 14, **caractérisée en ce qu'**elle comporte une interface d'utilisateur (i1, 11) pour paramétrer le module gestionnaire (12) par sélection d'une option de routage, le module gestionnaire (12) comprenant :
- des moyens de réception pour réceptionner simultanément deux flux essentiellement vidéo ou associés à un flux audio, un seul desdits flux vidéo étant reçu via la première interface (101) de communication ;
- une base de données d'un module d'identité amovible, consultée par le module gestionnaire, stockant des données d'autorisation de routage associées à une provenance des flux à router, des moyens de routage (6) desdits deux flux vidéo permettant d'aiguiller en temps réel ces flux vers au moins un port de sortie dont l'un appartient à la seconde interface (102) de communication pour permettre ledit transfert (E).

## Claims

1. A routing process of multimedia flows by means of a mobile radiocommunications station (1) equipped with a first communications interface (101) with a radiotelephone network (2), comprising a transfer step (E) of audio and/or video flow between the mobile station (1) and at least one local communications terminal (3) by using a second communications interface (102) of the mobile station (1), a receiving step (51) of audio and/or video flow being carried out in a processing unit (15) of the mobile station (1) during said transfer step (E), the process also comprising a management step by a management module (12) of the processing unit (15) of each received audio and/or video flow, **characterised in that** it comprises :
- a parametering step (50) of the management module (12) by means of a user interface (i1, 11) of the mobile station (1) for selecting at least one outlet interface of one of the communications interfaces (101, 102, 103) of the mobile station (1) ;
- a routing authorisation step (52) of the flow via said selected outlet interface, comprising an identification step (521) by the management module (12) of each audio and/or video flow received for determining an origin of the flow and a verification step (522) in a local database (DB) that the mobile station (1) has authorisation to export the flows, this authorisation being determined at least as a function of their origin, from export authorisation data linked to the flows of said determined origin; and
- a routing step (53) via routing means (6) of the management module (12), of each received audio and/or video flow, allowing transmission in real time of the received audio and/or video flow to at least one local terminal (3) external to the mobile station (1) during said transfer step (E), this destination terminal (3) of the transfer of the flow during this routing step (53) being determined as a function of the parametering step (50) and of the verification step (522) of the export authorisation data.

2. The process as claimed in Claim 1, in which the outlet interface selected during the parametering step (50) is selected from several outlet interfaces whereof one corresponds to the outlet interface of the first communications interface (101).

3. The process as claimed in Claim 1 or 2, comprising during transfer step (E):
- a receiving step by the terminal (3) of a signal (s1', s2', S1') transporting data packets corresponding to the transferred flow(s) by the mobile station (1);
- a conversion step of the received signal (s1', s2', S1'), by conversion means of the terminal (3); and
- a flow processing step by management application (30) of the terminal (3) to restore and locally broadcast audio and/or video signals (v1, v2', v2, V1, V2) via an audio and/or video broadcast device (32) connected locally to the terminal (3), and/or
- a registration step of data packets corresponding to the transferred flow(s), obtained during the conversion step, and/or
- a routing step, via management application (30) of the terminal (3), of recovered packets to an IP address determined to transmit these packets to a remote unit (D2) connected to the Internee network (8), followed by
- a transmission step to the remote unit, via a second interface of the terminal (3), of packets transporting the transferred flow(s) via the mobile station (1).

4. The process as claimed in any one of Claims 1 to 3, in which the routing step (53) to the external unit comprises a billing step of carriage fees as a function of the authorisation data recovered during the verification step (522).

5. The process as maimed in Claims 1 to 4, comprising storage of complementary management and/or commercial data on the client in said database (DB) of the identity module (M), these complementary data capable of being verified in external databases.

6. The process as claimed in any one of Claims 1 to 5, in which the routing authorisation step (52) comprises :
- a positioning control step of the mobile station (1), including receiving via the mobile station (1) of positioning data, the export authorisation data comprising data relative to authorised positioning, the routing step (53) being triggered only if the positioning data of the mobile station (1) coincide with an authorised positioning zone defined by the authorisation data, and/or
- a control step of the membership of the user to a receiving network community of the flow, the export authorisation data comprising information relative to management and/or commercial data, this step comprising control conducted on management and/or commercial data supplied by the operator of said receiving network.

7. A multimedia flow routing process by means of a mobile radiocommunications station (1) equipped with a first communication interface (101) with a radiotelephone network (2), as claimed in any one of Claims 1 to 6, comprising:
- a transfer step (E) of audio and/or video flow between the mobile station (1) and a local communications terminal (3) by using a second communications interface (102) of the mobile station (1),
- a receiving step (51) of audio and/or video flow being carried out in a processing unit (15) of the mobile station (1) during said transfer step (E),
- a management step via management module (12) of the processing unit (15) of each received audio and/or video flow, **characterised in that** it comprises :
- simultaneous receiving, via receiving means of the management module (12), during the receiving step, of two essentially video flows or flows linked to an audio flow, one of said video flows being received via the first communications interface (101),
- an identification step of the origin of each flow,
- a verification step via reading, carried out by control means (4) of the management module, (12), in a database (DB) of a removable identity module housed in the station, of routing authorisation data linked to said origin,
- a routing authorisation step,
- a routing step (53), in case of authorisation, induing switching via routing means (6) of said two video flows to at least one outlet port, one of which belongs to the second communications interface (102) to permit said transfer step (E).

8. The process as claimed in any one of Claims 1 to 7, in which switching is made to a single outlet port of the second communications interface (102), the routing step (53) comprising a step combining both of said video flows at the second communications interface (102).

9. The process as claimed in any one of Claims 1 to 8, in which the simultaneous receiving step is conducted in the management module (12) by two distinct assembles (E1, E2) for receiving data packets, one of which (E1) is linked to receiving video and optionally audio flow (f1) via the first communications interface (101) and the other (E2) is linked to receiving video and optionally audio flow (P2') via the second communications interface (102).

10. The process as claimed in Claim 8 or 9, in which the simultaneous receiving step is carried out in the management module (12) by two distinct assemblies for receiving data packets, one of which is linked to receiving video and optionally audio flow (p2) via the first communications interface (101) and the other is linked to receiving video and optionally audio flow (a1, v1) generated by devices (13, 110) of the mobile station (1).

11. The process as claimed in any one of Claims 1 to 10, in which the routing step (53) is preceded by a fusion step of the two video flows, via fusion means of the management module (12), to obtain images composed with separate sub-images corresponding to the respective flow video.

12. A mobile radiocommunications station (1) for piloting multimedia flow routing, comprising a first communications interface (101) with a radiotelephone network (2), a second communications interface (102) enabling transfer (E) of audio and/or video flow between the mobile station (1) and at least one local communications terminal (3), a processing unit (15) enabling receipt of audio and/or video flow during said transfer (E), and a management module (12) in the processing unit (15) to manage each received audio and/or video flow, **characterised in that** it comprises a user interface (i1, 11) for parametering the management module (12) via selection of a routing option and a local database (DB) storing authorisation data linked to an origin of the flows to be routed, the user interface (i1, 11) selecting at least one outlet interface of one of the communications interfaces (101, 102, 103) of the mobile station (1), the management module (12) comprising :
- routing authorisation means (4) of the flow across the selected outlet interface, capable of identifying each received audio and/or video flow to determine an origin of the flow and of verifying in the local database (DB) that the mobile station (1) has authorisation to export the flows, this authorisation being determined at least as a function of their origin, from export authorisation data linked to the flow of said determined origin; and
- routing means (6) of each received audio and/or video flow, enabling transmission in real time of the received audio and/or video flow to at least one local terminal (3) external to the mobile station (1) during said transfer (E), the routing means (6) being activated as a function of the routing option selected by the authorisation means (4) after recovery of said authorisation data, the receiving terminal (3) selected by these routing means (6) being determined as a function of the parametering of the management module (12) and the authorisation means (4).

13. The mobile station (1) as claimed in Claim 12, in which the user interface (i1, 11) comprises a screen displaying in at least one menu several choices of outlet interfaces whereof one corresponds to the outlet interface of the first communications interface (101).

14. The mobile station (1) as claimed in Claim 12 or 13, comprising a removable identity module (M) housed inside a housing of the removable station, the identity module (M) including:
- encrypting means usable by the management module (12) for encrypting flows to be routed when these flows have been identified as not generated on the mobile station (1) itself.
- signature means usable by the management module (12) to sign flows to be routed when these flows have been identified as not generated on the mobile station (1) itself.

15. The mobile station (1) as claimed in any one of Claims 12 to 14, **characterised in that** it comprises a user interface (i1, 11) for parametering the management module (12) by selecting a routing option, the management module (12) comprising :
- receiving means for simultaneously receiving two essentially video flows or flows linked to the audio flow, one of said video flows being received via the first communications interface (101);
- a database of a removable identity module, consulted by the management module, storing routing authorisation data linked to an origin of the flows to be routed, routing means (6) of said two video flows for switching these flows in real time to at least one outlet port, one of which belongs to the second communications interface (102) to allow said transfer (E).

## Patentansprüche

1. Verfahren zur Leitweglenkung von Multimediaströmen anhand einer Funkmobilstation (1), die mit einer ersten Schnittstelle (101) zur Kommunikation mit einem Funktelefonnetz (2) ausgestattet ist, umfassend einen Schritt (E) des Weiterleitens von Audio- und/oder Videoströmen zwischen der Mobilstation (1) und mindestens einem lokalen Kommunikationsendgerät (3) durch die Verwendung einer zweiten Kommunikationsschnitstelle (102) der Mobilstation (1), einen Schritt (51) des Empfangens von Audio- und/oder Videoströmen, der in einer Verarbeitungseinheit (15) der Mobilstation (1) während des Schritts (E) des Weiterleitens durchgeführt wird, wobei das Verfahren ferner einen Schritt des Verwalten durch ein Verwaltungsmodul (12) der Verarbeitungseinheit (15) jedes empfangenen Audio- und/oder Videostroms umfasst, **dadurch gekennzeichnet, dass** es Folgendes umfasst:
- einen Schritt (50) des Parametrierens des Verwaltungsmoduls (12) anhand einer Benutzerschnittstelle (i1, 11) der Mobilstation (1), um mindestens eine Ausgangsschnittstelle einer der Komm.unikationsschnittstellen (101, 102, 103) der Mobilstation (1) auszuwählen;
- einen Schritt (52) des Genehmigens der Leitweglenkung des Stroms durch die ausgewählte Ausgangsschnitlstelle, umfassend einen Schritt (521) des ldentifizierens durch das Verwaltungsmodul (12) jedes empfangenen Audio- und/oder Videostroms, um es zu ermöglichen, eine Herkunft des Stroms zu bestimmen, und einen Schritt (522) des Überprüfens in einer lokalen Datenbank (DB), dass die Mobilstation (1) über eine Genehmigung verfügt, um die Ströme zu exportieren, wobei diese Genehmigung mindestens in Abhängigkeit ihrer Herkunft aus Exportgenehmigungsdaten, die mit den Strömen der bestimmten Herkunft verknüpft sind, bestimmt wird; und
- einen Schritt (53) des Leitweglenkens durch Leitweglenkungsmittel (6) des Verwaltungsmoduls (12) jedes empfangenen Audio- und/oder Videostroms, der eine Echtzeitübertragung des empfangenen Audio- und/oder Videostroms an mindestens ein lokales Endgerät (3) außerhalb der Mobilstation (1) während des Schritts (E) des Weiterleitens ermöglicht, wobei dieses Zielendgerät (3) der Weiterleitung des Stroms während dieses Leitweglenkungsschritts (53) in Abhängigkeit von dem Schritt (50) des Parametrierens und von dem Schritt (522) des Überprüfens der Exportgenehmigungsdaten bestimmt wird.

2. Verfahren nach Anspruch 1, wobei die Ausgangsschnittstelle, die bei dem Parametrierungsschritt (50) ausgewählt wurde, aus mehreren Ausgangsschnittstellen gewählt wird, von denen eine der Ausgangsschnittstelle der ersten Kommunikationsschnittstelle (101) entspricht.

3. Verfahren nach Anspruch 1 oder 2, umfassend beim Weiterleitungsschritt (E):
- einen Schritt des Empfangens durch das Endgerät (3) eines Signals (s1', s2', S1'), das Datenpakete transportiert, die dem oder den von der Mobilstation (1) weitergeleiteten Strom bzw. Strömen entsprechen;
- einen Schritt des Umwandelns des empfangenen Signals (s1', s2', S1') durch Umwandlungsmittel des Endgeräts (3); und
- einen Schritt des Verarbeitens der Ströme durch eine Verwaltungsapplikation (30) des Endgeräts (3), um lokal Audio- und/oder Videosignale (v1, v2', v2, V1, V2) über eine Vorrichtung (32) zum Aussenden von Ton und/oder Bild, die lokal an das Endgerät (3) angeschlossen ist, wiederzugeben und auszustrahlen; und/oder
- einen Schritt des Aufzeichnens von Datenpaketen, die dem oder den weitergeleiteten Strom bzw. Strömen entsprechen, die während es Umwandlungsschrittes erzielt wurden; und/oder
- einen Schritt des Leitweglenkens über eine Verwaltungsapplikation (30) des Endgerätes (3) der wiedergewonnenen Pakete an eine bestimmte IP-Adresse, um diese Pakete an ein entferntes Gerät (D2) zu übertragen, das an das Internet (8) angeschlossen ist, gefolgt von
- einem Schritt des Sendens an das entfernte Gerät über eine zweite Schnittstelle des Endgeräts (3) von Paketen, die den oder die von der Mobilstation (1) weitergeleiteten Strom bzw. Ströme transportieren.

4. Verfahren nach einem der Ansprüche 1 bis 3, wobei der Schritt (53) des Leitweglenkens zu dem Außengerät einen Schritt des Anrechnens von Durchgangsgebühren in Abhängigkeit von den Genehmigungsdaten, die im Überprüfungsschritt (522) wiedergewonnen wurden, umfasst.

5. Verfahren nach Anspruch 1 bis 4, umfassend ein Speichern von passenden Verwaltung- und/oder Geschäftsdaten über den Kunden in der Datenbank (DB) des ldentitätsmoduls (M), wobei diese passenden Daten in externen Datenbanken überprüft werden können,

6. Verfahren nach einem der Ansprüche 1 bis 5, wobei der Schritt (52) des Genehmigens der Leitweglenkung Folgendes umfasst:
- einen Schritt des Kontrollierens des Standortes der Mobilstation (1), umfassend ein Empfangen durch die Mobilstation (1) von Standortdaten, wobei die Exportgenehmigungsdaten Daten über genehmigte Standorte umfassen, wobei der Leitweglenkungsschritt (53) nur ausgelöst wird, wenn die Standortdaten der Mobilstation (1) mit einer genehmigten Standortzone übereinstimmen, die von den Genehmigungsdaten definiert wird, und/oder
- einen Schritt des Kontrollierens der Zugehörigkeit des Benutzers zu einer Gemeinschaft eines Zielnetzwerks für die Ströme, wobei die Exportgenehmigungsdaten Informationen über Verwaltungs- und/oder Geschäftsdaten enthalten, wobei dieser Schritt eine Kontrolle umfasst, die an Verwaltungs- und/oder Geschäftsdaten ausgeführt wird, die von dem Betreiber des Zielnetzwerks bereitgestellt werden.

7. Verfahren zur Leitweglenkung von Multimediaströmen anhand einer Funkmobilstation (1), die mit einer ersten Schnittstelle (101) zur Kommunikation mit einem Funktelefonnetz (2) ausgestattet ist, nach einem der Ansprüche 1 bis 6, umfassend:
- einen Schritt (E) des Weiterleitens von Audio- und/oder Videoströmen zwischen der Mobilstation (1) und einem lokalen Kommunikationsendgerät (3) unter Verwendung einer zweiten Kommunikationsschnittstelle (102) der Mobilstation (1),
- einen Schritt (51) des Empfangens von Audio- und/oder Videoströmen, der in einer Verarbeitungseinheit (15) der Mobilstation (1) während des Weiterleitungsschritts (E) durchgeführt wird,
- einen Schritt des Verwaltens durch ein Verwaltungsmodul (12) der Verarbeitungseinheit (15) von jedem empfangenen Audio- und/oder Videostrom, **dadurch gekennzeichnet, dass** es Folgendes umfasst:
- einen gleichzeitigen Empfang durch Empfangsmittel des Verwaltungsmoduls (12) während des Empfangsschritts von zwei Strömen, die hauptsächlich Videoströme sind oder mit einem Audiostrom verknüpft sind, wobei nur einer dieser Videoströme über die erste Kommunikationsschnittstelle (101) empfangen wird,
- einen Schritt des Identifizierens einer Herkunft jedes Stroms,
- einen Schritt des Überprüfens durch eine Ablesung, die von Kontrollmitteln (4) des Verwaltungsmoduls (12) durchgeführt wird, aus einer Datenbank (DB) eines abnehmbaren Identitätsmoduls, das in der Station untergebracht ist, von Leitweglenkungs-Genehmigungsdaten, die mit der Herkunft verknüpft sind,
- einen Schritt des Genehmigens der Leitweglenkung,
- einen Schritt des Leitweglenkens (53), der im Falle der Genehmigung eine Umleitung durch Leitweglenkungsmittel (6) der beiden Videoströme zu mindestens einem Ausgangsport umfasst, von denen einer der zweiten Kommunikationsschnittstelle (102) angehört, um den Weiterleitungsschritt (E) zu ermöglichen.

8. Verfahren nach einem der Anspruche 1 bis 7, wobei die Umleitung zu einem einzigen Ausgangsport der zweiten Kommunikationsschnittstelle (102) erfolgt, wobei der Leitweglenkungsschritt (53) einen Schritt des Kombinierens der beiden Videoströme an der zweiten Kommunikationsschnittstelle (102) umfasst.

9. Verfahren nach einem der Ansprüche 1 bis 8, wobei der Schritt des gleichzeitigen Empfangens in dem Verwaltungsmodul (12) durch zwei getrennte Anordnungen (E1, E2) zum Empfangen von Datenpaketen erfolgt, von denen eine (E1) mit einem Empfang von Videoströmen und gegebenenfalls von Audioströmen (f1) über die erste Kommunikationsschnittstelle (101) verknüpft ist und die andere (E2) mit einem Empfang von Videoströmen und gegebenenfalls von Audioströmen (P2') über die zweite Kommunikationsschnittstelle (102) verknüpft ist.

10. Verfahren nach Anspruch 8 oder 9, wobei der Schritt des gleichzeitigen Empfangens in dem Verwaltungsmodul (12) über zwei getrennte Anordnungen zum Empfangen von Datenpaketen erfolgt, von denen eine mit einem Empfang von Videoströmen und gegebenenfalls von Audioströmen (p2) über die erste Kommunikationsschnittstelle (101) verknüpft ist und die andere mit einem Empfang von Videoströmen und gegebenenfalls von Audioströmen (a1, v1), die von Vorrichtungen (13, 110) der Mobilstation (1) erzeugt werden, verknüpft ist.

11. Verfahren nach einem der Ansprüche 1 bis 10, wobei dem Leitweglenkungsschritt (53) ein Schritt des Einbindens von den beiden Videoströmen durch Einbindungsmittel des Verwaltungsmoduls (12) vorausgeht, um zusammengesetzte Bilder mit getrennten Teilbildern, die den jeweiligen Videoströmen entsprechen, zu erzielten.

12. Funkmobilstation (1) zum Ansteuern einer Leitweglenkung von Multimediaströmen, umfassend eine erste Kommunikationsschnittstelle (101) mit einem Funktelefonnetz (2), eine zweite Kommunikationsschnittstelle (102), die eine Weiterleitung (E) von Audio- und/oder Videoströme zwischen der Mobilstation (1) und mindestens einem lokalen Kommunikationsendgerät (3) ermöglicht, eine Verarbeitungseinheit (15), die den Empfang von Audio- und/oder Videoströmen während der Weiterleitung (E) ermöglicht, und ein Verwaltungsmodul (12) in der Verarbeitungseinheit (15), um jeden empfangenen Audio- und/oder Videostrom zu verwalten, **dadurch gekennzeichnet, dass** sie eine Benutzerschnittstelle (i1, 11), um das Verwaltungsmodul (12) durch Auswahl einer Leitweglenkungsoption zu parametrieren, und eine lokale Datenbank (DB), die Genehmigungsdaten speichert, die mit einer Herkunft der zu teilenden Ströme verknüpft sind, umfasst, wobei die Benutzerschnittstelle (i1, 11) es ermöglicht, mindestens eine Ausgangsschnittstelle einer der Kommunikationsschnittstellen (101, 102, 103) der Mobilstation (1) auszuwählen, wobei das Verwaltungsmodul (12) Folgendes umfasst:
- Mittel (4) zur Genehmigung der Leitweglenkung des Stroms über die ausgewählte Ausgangsschnittstelle, die dazu geeignet sind, jeden empfangenen Audio- und/oder Videostrom zu identifizieren, um es zu ermöglichen, eine Herkunft des Stroms zu bestimmen, und in der lokalen Datenbank (DB) zu überprüfen, dass die Mobilstation (1) über eine Genehmigung verfügt, um die Ströme zu exportieren, wobei diese Genehmigung mindestens in Abhängigkeit von ihrer Herkunft ausgehend von Exportgenehmigungsdaten, die mit den Strömen der bestimmten Herkunft verknüpft sind, bestimmt wird; und
- Mittel (6) zur Leitweglenkung jedes empfangenen Audio- und/oder Videostroms, die eine Echtzeitübertragung des empfangenen Audio- und/oder Videostroms an mindestens ein lokales Endgerät (3) außerhalb der Mobilstation (1) während der Weiterleitung (E) ermöglichen, wobei die Leitweglenkungsmittel (6) in Abhängigkeit von der Leitweglenkungsoption aktiviert werden, die von den Genehmigungsmitteh (4) nach der Wiedergewinnung der Genehmigungsdaten ausgewählt werden, wobei das Zielendgerät (3), das von diesen Leitweglenkungsmitteln (6) ausgewählt wird, in Abhängigkeit von der Parametrierung des Verwaltungsmoduls (12) und der Genehmigungsmittel (4) bestimmt wird.

13. Mobilstation (1) nach Anspruch 12, wobei die Benutzerschnittstelle (i1, 11) einen Bildschirm umfasst, der in mindestens einem Menü mehrere Ausgangsschnittstellen-Möglichkeiten anzeigt, von denen eine der Ausgangsschnittstelle der ersten Kommunikationsschnittstelle (101) entspricht.

14. Mobilstation (1) nach Anspruch 12 oder 13, umfassend ein abnehmbares ldentitätsmodul (M), das im Innern eines Gehäuses der Mobilstation untergebracht ist, wobei das Identitätsmodul (M) Folgendes umfasst:
- Mittel zum Verschlüsseln, die von dem Verwaltungsmodul (12) verwendet werden können, um die leitenden Ströme zu verschlüsseln, wenn diese Ströme als nicht an der Mobilstation (1) selber erzeugt identifiziert werden,
- Mittel zum Signieren, die von dem Verwaltungsmodul (12) verwendet werden können, um die zu leitenden Ströme zu signieren, wenn diese Ströme als nicht an der Mobilstation (1) selber erzeugt identifiziert werden.

15. Mobilstation (1) nach einem der Ansprüche 12 bis 14, **dadurch gekennzeichnet, dass** sie eine Benutzerschnittstelle (i1, 11) zum Parametrieren des Verwaltungsmoduls (12) durch Auswahl einer Leitweglenkungsoption umfasst, wobei das Verwaltungsmodul (12) Folgendes umfasst:
- Empfangsmittel um gleichzeitig zwei Ströme zu empfangen, die hauptsächlich Videoströme sind oder mit einem Audiostrom verknüpft sind, wobei nur einer der Videoströme über die erste Kommunikationsschnittstelle (101) empfangen wird;
- eine Datenbank eines abnehmbaren Identitätsmoduls, die von dem Verwaitungsmodul abgefragt wird und die Leitweglenkungs-Genehmigungsdaten speichert, die mit einer Herkunft der zu leitenden Ströme verknüpft sind, wobei Leitweglenkungsmittel (6) der beiden Videoströme es ermöglichen, diese Ströme in Echtzeit an mindestens einen Ausgangsport umzuleiten, von denen einer der zweiten Kommunikationsschnittstelle (102) angehört, um die Weiterleitung (E) zu ermöglichen.
